# EUROPÄISCHE PATENTSCHRIFT

(11) **EP 4 328 693 B1**
(45) Veröffentlichungstag und Bekanntmachung des Hinweises auf die Patenterteilung: **09.07.2025**
(21) Anmeldenummer: 23193510.7
(22) Anmeldetag: 25.08.2023
(51) Int. Cl.: G05B 23/02

(54) **ÜBERWACHUNGSVERFAHREN FÜR DEN BETRIEB EINER ANZAHL VON EINER ODER MEHREREN ANTRIEBSEINRICHTUNGEN, INSBESONDERE FÜR DEN BETRIEB EINER BRENNKRAFTMASCHINE, UND SYSTEM AUSGEBILDET FÜR DAS ÜBERWACHUNGSVERFAHREN**
MONITORING METHOD FOR OPERATING A NUMBER OF ONE OR MORE DRIVE DEVICES, IN PARTICULAR FOR OPERATING AN INTERNAL COMBUSTION ENGINE, AND SYSTEM FOR THE MONITORING METHOD
PROCÉDÉ DE SURVEILLANCE DU FONCTIONNEMENT D'UN CERTAIN NOMBRE DE DISPOSITIFS D'ENTRAINEMENT , EN PARTICULIER POUR LE FONCTIONNEMENT D'UN MOTEUR À COMBUSTION INTERNE, ET SYSTÈME CONÇU POUR LE PROCÉDÉ DE SURVEILLANCE

(30) Priorität: 26.08.2022 DE 102022121716
(43) Veröffentlichungstag der Anmeldung: 28.02.2024
(73) Patentinhaber: Rolls-Royce Solutions GmbH, 88045 Friedrichshafen (DE)
(72) Erfinder: Frey, Christian, 88682 Salem (DE); Weiss, Tobias, 88213 Ravensburg (DE)
(74) Vertreter: Eisenführ Speiser

(56) Entgegenhaltungen:
- US-A1- 2018 158 314
- US-A1- 2019 353 131

## Beschreibung

Die Erfindung betrifft ein Überwachungsverfahren nach dem Oberbegriff des Anspruchs 1 für den Betrieb einer Anzahl von einer oder mehreren Antriebseinrichtungen, insbesondere für den Betrieb einer Brennkraftmaschine, wobei eine Antriebseinrichtung eine Steuereinrichtung aufweist und ein Betriebsparameter der Antriebseinrichtung auf Grundlage von mittels der Steuereinrichtung erfassten Betriebsdaten für den Betriebsparameter überwacht wird, wobei das Verfahren die Schritte aufweist:
- Überwachen des Betriebsparameters der Antriebseinrichtung mit einem Monitoralgorithmus für die Betriebsdaten, insbesondere eines Monitoralgorithmus eines Beobachtermoduls der Steuereinrichtung,
- Anwenden eines Störungsdetektionsalgorithmus für die erfassten Betriebsdaten einer Störungserkennung zum Erkennen einer Störung betreffend den Betriebsparameter der Antriebseinrichtung,
- Senden einer Störungsanzeige aus der Störungserkennung für die Antriebseinrichtung basierend auf einem Ergebnis des Störungsdetektionsalgorithmus;
- Empfangen der Störungsanzeige und Überprüfen des Ergebnisses, insbesondere Empfangen und Überprüfen in einer Servereinrichtung einer Kontrollinstanz,
- Aktivieren einer Stellregelverbindung zur Antriebseinrichtung in Bezug auf den Betriebsparameter und Rückkoppeln eines Überwachungswertes für den Betriebsparameter an eine Rückkopplungsverbindung zum Monitoralgorithmus.

Die Erfindung betrifft auch ein System ausgebildet für das Überwachungsverfahren.

Steuer- und Regelverfahren für eine einzelne Antriebseinrichtung können mittlerweile hochkomplex mit sensorischer Unterstützung ausgebildet sein und sollen sich in einer inzwischen umfassenden Weise an den individuellen Zustand einer Antriebseinrichtung anpassen lassen. So beschreibt US 2019/353131 A1 ein Detektionsverfahren zum Betrieb einer Brennkraftmaschine, das eine Klopfkontrollsteuerung umfasst.

WO 2019/106534 A1 beschreibt ein Verfahren zum Betreiben eines Antriebsstrangs für ein Fahrzeug. Das Verfahren umfasst das Empfangen von Signalen einer Vielzahl von Sensoren, die mit dem Fahrzeug verknüpft sind. Dabei können optimale Schwellwerte für Klassifikationen von Sensordaten geändert werden in Bezug auf Eingabesignale für den Antriebsstrang und das Empfangen von Rückmeldesignalen. Prioritäten für die Sensorsignale können geändert werden basierend auf einer Attributierung der Signale und unter Bestätigung von aktuellen Prioritäten für die Signale. Die Anpassung des Betriebsmanagements kann auf Grundlage von Look-Up-Tabellen umgesetzt werden und so können die Eingabesignale in den Antriebsstrang und die Messung der Verwendung von Rückmeldesignalen erfolgen. Das Verfahren kann also dynamisch angepasst werden und Daten des Antriebsstrangs modifizieren, was vor allem in Look-Up-Tabellen während eines Fahrzeugbetriebs in einem zweiten Rahmen von Bedingungen erfolgt.

Es ist auch bekannt für solche und andere Steuerungen einen regelungstechnisch eingebundenen Beobachter zu nutzen; Beobachter im Sinne der Regelungstechnik, rekonstruieren nicht messbare Größen (Zustände) aus bekannten Eingangsgrößen (z. B. Stellgrößen oder messbaren Störgrößen) und Ausgangsgrößen (Messgrößen) eines beobachteten Referenzsystems. Dazu ist im Beobachter das beobachtete Referenzsystem als Modell nachgebildet und es werden mit einem Regler die messbaren, und deshalb mit dem Referenzsystem vergleichbaren, Zustandsgrößen nachgeführt. So soll vermieden werden, dass ein Modell, insbesondere bei Referenzsystemen mit integrierendem Verhalten, einen über die Zeit wachsenden Fehler generiert. Treffender wäre es von einem referenzgeregelten Synthetisierer (Englisch: "reference controlled synthesizer") zu sprechen. Ein Beobachter kann genau dann entworfen werden, wenn das Referenzsystem über die vorhandenen Messgrößen beobachtbar ist. Die Beobachtbarkeit ist jedoch im Allgemeinen keine notwendige Bedingung für den Beobachterentwurf. Stattdessen ist es ausreichend, wenn das System detektierbar ist. Eingesetzt werden Beobachter z. B. bei Zustandsreglern zur Rekonstruktion nicht messbarer Zustandsgrößen, bei zeitdiskreten Regelungen, bei denen die Messgröße nicht in jedem Zyklus aktualisiert werden kann und in der Messtechnik als Ersatz für technisch oder wirtschaftlich nicht mögliche Messungen. Eine durchgängige Theorie wurde ab 1964 von dem amerikanischen Regelungstechniker David Luenberger für lineare Systemmodelle und eine konstante proportionale Rückführung eines Fehlers entwickelt. Das Verfahren kann prinzipiell auf nichtlineare Modelle erweitert werden.

Bei einer an sich bekannten Vorgehensweise zum Steuern und Regeln einer Brennkraftmaschine ist es für spezielle Situationen auch an sich bekannt, eine falsch-positive Erkennung im Sinne der Erkennung eines Artefakts -d. h. eines im Folgenden auch sogenannten "artifiziellen Ergebnisses"-- zu leisten; dies nach allgemeinem Verständnis im Unterschied zu einer "wahr-positiven" Erkennung im Sinne der Erkennung eines "echten Ereignisses".

US 2018/0158314 A1 offenbart ein Verfahren zur Trendanalyse und automatischen Abstimmung von Alarm Parametern für eine Maschine, wobei das Verfahren das Erhalten von zustandsbezogenen Messungen der Maschine umfasst und basierend darauf das bedingte Auslösen eines Alarms und das Korrelieren einer Beziehung zwischen ausgelösten Alarmen und den erkannten Defekten, Zählen der Anzahl der echten Positiven, falschen Negativen und Falsch-Positiven aus den aktuellen Messdaten, Vergleichen der Anzahl der gezählten echten Positiven, falschen Negativen und Falsch-Positiven mit den festgelegten akzeptablen Grenzwerten.

Aus WO 2018/7802 A1 ist ein Verfahren zum Betreiben eines Betriebs einer Brennkraftmaschine bekannt, die ein Kraftstoffeinspritzsystem aufweist, das wiederum einen Hochdruckspeicher für Brennstoff umfasst, wobei der Hochdruck des Einspritzsystems über die Zeit im Rahmen eines sog. "Monitoring" überprüft wird. Bei einer hochdruckabhängigen Startzeit für eine Einspritzung wird geprüft, ob eine kontinuierliche Einspritzüberwachung umgesetzt werden soll, indem überprüft wird, ob eine Hochdruckoszillation innerhalb eines Oszillation-Zeitintervalls vor dem Einspritzstart aufgetreten ist. Dies umfasst in diesem Fall auch eine Fehlererkennung, das heißt, eine falsch-positive Erkennung einer Dauereinspritzung wird vermieden. Somit kann das unnötige Setzen eines Alarmsignals, sowie gegebenenfalls sogar das Abstellen der Brennkraftmaschine ohne einen real vorliegenden triftigen Grund, vermieden werden.

Daneben gibt es mittlerweile vor allem eine erweiterte Möglichkeit, den Betrieb einer Antriebseinheit, insbesondere einer Brennkraftmaschine, zu überwachen. Darüber hinaus, jenseits solcher allfälliger recht komplexer Regelstrategien, hat es sich mittlerweile auch als sinnvoll,jedoch mit einem völlig anderen Ansatz-- erwiesen, "lediglich" eine Überwachung von Antriebseinrichtungen umzusetzen, insbesondere, um beispielsweise den Gesundheitszustand einer Brennkraftmaschine zu diagnostizieren. Dazu haben sich Ansätze im Rahmen von sog. "BIG DATA"-Überwachungen als fortschrittlich erwiesen. Dabei wird jedoch ein hoher Aufwand für den Umgang mit großen Datenmengen betrieben und muss auch für dessen Auswertung zur Verfügung stehen. Außerdem setzt dies einen hohen Hardware- und Rechen-Aufwand an Analytik voraus. Um solche Systeme zu trainieren, ist es erforderlich, dass ebenfalls große Datenmengen zur Verfügung stehen und es müssen recheneffiziente Algorithmen in der Lage sein, die Ergebnisse im Traningsprozeß zu validieren.

So ist aus US 2018/148037 A1 ein Verfahren bekannt, bei dem ein interner Fehler eines Drucksensors stromabwärts einer Brennstoffpumpe eines Brennstoffsystems eines Fahrzeugs diagnostiziert wird. Maßnahmen zum Betrieb des Brennstoffsystems hängen davon ab, ob der Drucksensorausgang abflacht für wenigstens eine Schwellwertzeit, was indikativ für einen Fehler sein kann. Die Vorgehensweise wird durch ein dynamisches Lernverfahren verbessert, bei dem ein Druck eines Überdruckventils und ein Druck des Drucksensors überwacht wird.

Solche und andere an sich bekannte Vorgehensweisen von Fehlerdetektion auf Grundlage von plausiblen Annahmen mit Schwellwertanalysen sind jedoch noch verbesserbar. Die meisten dieser Verfahren sind außerdem vergleichsweise speziell zugeschnitten auf individuelle Antriebseinrichtungen unter Berücksichtigung der Eigenarten eines Antriebssystems oder einer Flotte solcher Antriebssysteme und deren Komponenten.

US 2019/0310618 A1 beschreibt insofern einen Ansatz für ein System und eine Software zum Integrieren eines modellbasierten und datengetriebenen Diagnosesystems, bei dem automatisch Unterschiede in einem dynamischen System ausgemacht werden und diese Unterschiede oder Abweichungen zur Fehlerdetektion und zur Identifizierung bzw. Isolation derselben (dort sog. "FDI") für ein automatisches Fehleridentifikationssystem genutzt werden. Durch die Kombination eines modellbasierten Ansatzes und eines datengetriebenen Ansatzes zum Generieren von Restgrößen oder Störgrößen ist es möglich, Fehler zu detektieren, zu isolieren und zu identifizieren. Im Unterschied zu einem Normbetrieb können beispielsweise Fehlermodi geclustert und klassifiziert werden. Anwendbar ist eine solche Vorgehensweise beispielsweise für eine Flotte von netzwerkverbundenen Antriebseinrichtungen wie Baggern, Nutzfahrzeugen oder Förderanlagen. Auch ein solches Monitorverfahren für den Betrieb einer Anzahl von ein oder mehreren Antriebseinrichtungen ist noch verbesserbar.

Insbesondere ist es wünschenswert, dass nicht nur die Fehlererkennung bei einem solchen Verfahren an sich basierend auf einer hohen Datenmenge erfolgt, sondern darüber hinaus die Verlässlichkeit der genutzten Daten überprüft, bzw. eine Weiterbildung des Verfahrens anhand solcher verlässlicher Daten, erfolgen kann. Dabei sollte berücksichtigt werden, dass die Überwachungs- und Steuersysteme an sich bereits eine hohe Komplexität aufweisen. Es sollte auch berücksichtigt werden, dass übliche Vorgehensweisen wie das redundante Ausführen von Sensorik oder das weitere Ausbauen der Modellbildung oder Look-Up-Tabellen zu einer weiteren Erhöhung der Hardware-, bzw. der Softwareaufwände führt.

An dieser Stelle setzt die Erfindung an, deren Aufgabe es ist, ein an sich bekanntes Überwachungsverfahren und System zur Überwachung zu verbessern, insbesondere im Hinblick darauf, einen oder mehrere der vorgenannten Aspekte zu verbessern. Besonders soll ein Überwachungsverfahren und System zur Überwachung der eingangs genannten Art dahingehend verbessert werden, dass die Verlässlichkeit der genutzten Daten im Überwachungsverfahren und System verbessert ist und/oder das Überwachungsverfahren und System selbst im Betrieb weiterentwickelbar, bzw. optimierbar bleibt.

Insbesondere ist es eine Aufgabe der Erfindung ein datenbasiertes Überwachungsverfahren und System der eingangs genannten Art dahingehend weiterzubilden, dass es zum einen in der Lage ist, mit einem angemessenen Datenaufwand betrieben zu werden und es zum anderen einen dennoch vergleichsweise breiten Einsatzspielraum hat. Vorzugsweise sollte ein zu großer Daten- und Analyse-Aufwand wie auch eine zu hohe speziell zugeschnittene Ausrichtung des Überwachungsverfahren vermieden werden.

Die Aufgabe wird mit einem Überwachungsverfahren des Anspruchs 1 gelöst.

Die Erfindung geht dazu von einem Überwachungsverfahren für den Betrieb einer Anzahl von einer oder mehreren Antriebseinrichtungen aus, insbesondere für den Betrieb einer Brennkraftmaschine, wobei eine Antriebseinrichtung eine Steuereinrichtung aufweist und ein Betriebsparameter der Antriebseinrichtung auf Grundlage von mittels der Steuereinrichtung erfassten Betriebsdaten für den Betriebsparameter überwacht wird. Das Überwachungsverfahren weist die Schritte auf:
- Überwachen des Betriebsparameters der Antriebseinrichtung mit einem Monitoralgorithmus für die Betriebsdaten, insbesondere eines Monitoralgorithmus eines Beobachtermoduls der Steuereinrichtung,
- Anwenden eines Störungsdetektionsalgorithmus für die erfassten Betriebsdaten einer Störungserkennung zum Erkennen einer Störung betreffend den Betriebsparameter der Antriebseinrichtung,
- Senden einer Störungsanzeige aus der Störungserkennung für die Antriebseinrichtung basierend auf einem Ergebnis des Störungsdetektionsalgorithmus;
- Empfangen der Störungsanzeige und Überprüfen des Ergebnisses, insbesondere Empfangen und Überprüfen in einer Servereinrichtung einer Kontrollinstanz,
- Aktivieren einer Stellregelverbindung zur Antriebseinrichtung in Bezug auf den Betriebsparameter und Rückkoppeln eines Überwachungswertes für den Betriebsparameter an eine Rückkopplungsverbindung zum Monitoralgorithmus.

Erfindungsgemäß ist weiter vorgesehen, dass das Ergebnis nach Prüfung als falsch-positiv (artifiziell) oder wahr-positiv (echt) qualifiziert wird.

Erfindungsgemäß ist weiter vorgesehen, dass
- die Störungserkennung eine Diskriminierungseinheit aufweist, die
   - das, insbesondere nur das, als wahr-positive (echt) qualifizierte Ergebnis an die Stellregelverbindung zu einem Stellglied gibt und
   - das, insbesondere nur das, als falsch-positiv (artifiziell) qualifizierte Ergebnis an die Rückkopplungsverbindung zum Beobachtermodul gibt.

Ausgehend von einem Überwachungsverfahren der eingangs genannten Art sind bei dem Überwachungsverfahren gemäß der Erfindung also zunächst in an sich bekannter Weise die eingangs genannten Schritte vorgesehen, gemäß denen --hier verkürzt wiedergegeben-- auf Grundlage von mittels einer Steuereinrichtung einer Antriebseinrichtung erfassten Betriebsdaten ein Betriebsparameter erfasst und überwacht werden kann für eine Antriebseinrichtung, ein Störungsdetektionsalgorithmus angewendet wird und als Ergebnis eine Störungsanzeige gesendet werden kann, wobei das Ergebnis des Störungsdetektionsalgorithmus nach Empfang der Störungsanzeige überprüfbar ist. Erst dann wird eine Stellregelverbindung zur Antriebseinrichtung aktiviert. Es ist auch in Bezug auf den Betriebsparameter ein Rückkoppeln eines Überwachungswertes für den Betriebsparameter an eine Rückkopplungsverbindung zum Monitoralgorithmus an sich bekannt, nämlich um das Rückkoppeln eines Betriebsparameters zum Monitoralgorithmus im Sinne einer Feedback-Schleife zu ermöglichen.

Die Erfindung geht von der Überlegung aus, dass solche Ansätze zur Überprüfung des Ergebnisses, bzw. Aktivieren einer Stellregelverbindung und einer Feedbackschleife im Rahmen eines datenbasierten Überwachungsverfahrens noch verbesserbar ist. Erfindungsgemäß ist zur Verbesserung der Prüfung vorgesehen, dass das Ergebnis nach Prüfung als falsch-positiv (artifiziell) oder wahr-positiv (echt) qualifiziert wird.

Vorliegend ist ein falsch-positiv qualifiziertes Ergebnis als ein artifiziell entstandenes Ergebnis zu verstehen. In dem Sinne ist ein falsch-positiv qualifiziertes Ergebnis also als Ergebnis, das künstlich entstanden ist oder gekünstelt ist. Ein falsch-positiv qualifiziertes Ergebnis ist in dem Sinne als ein nicht-echtes Ergebnis zu verstehen, das "nicht ernst genommen", insbesondere ignoriert, werden sollte zum Anpassen der Antriebseinrichtung mittels dem Stellglied. Ein falsch-positiv qualifiziertes Ergebnis kann nach dem Konzept der Erfindung gleichwohl sinnhaft genutzt werden. Vorteilhaft kann auch ein falsch-positiv qualifiziertes Ergebnis als ein artifiziell entstandenes Ergebnis nämlich zur Lern-Rückkopplung genutzt werden. Dadurch kann beispielsweise ein Monitoralgorithmus und/oder ein Störungsdetektionsalgorithmus zur Verbesserung desselben und insbesondere zukünftigen Vermeidung von falsch-positiv qualifizierten Ergebnissen angepasst werden.

Vorliegend ist andererseits ein wahr-positiv qualifiziertes Ergebnis als ein echt entstandenes Ergebnis zu verstehen. In dem Sinne ist ein wahr-positiv qualifiziertes Ergebnis also ein Ergebnis, das verlässlich bzw. mit Grund entstanden ist oder echt bzw. begründet ist. Damit kann das als wahr-positiv qualifizierte, insofern "echte" Ergebnis an die Stellregelverbindung zu einem Stellglied gegeben werden. Insbesondere kann eine Korrekturmaßnahme an der Antriebseinrichtung mittels dem Stellglied in Abhängigkeit vom wahr-positiv qualifizierten Ergebnis erfolgen.

Die Fälle lassen sich analog auf negativ qualifizierte Ergebnisarten anwenden. Die vier Fälle werden in verschiedenen Kontexten auch anders benannt. So sind auch die englischen Begriffe *true positive, false positive* (bzw. *false negative* und *true negative*) gebräuchlich. Im Rahmen der Signalentdeckungstheorie werden wahr-positive Fälle auch als richtig-positive oder *hit* bezeichnet. (Falsch-negative Fälle werden auch als *miss* und wahr-negative werden auch als richtig-negative Fälle oder als *correct rejection* bezeichnet).

Im Folgenden werden die gewonnen Ergebnisse als wahr-positiv (echt) qualifiziert oder falsch-positiv (artifiziell) qualifiziert. Im Folgenden und in den Ansprüchen ist für den Begriff wahr-positiv das Synonym "echt" und den Begriff falsch-positiv das Synonym "artifiziell" in Klammern geführt zur Verdeutlichung im obigen Sinne.

Erfindungsgemäß ist zudem entsprechend vorgesehen, dass die Störungserkennung eine Diskriminierungseinheit aufweist, die das wahr-positive (also als echt qualifizierte) Ergebnis an die Stellregelverbindung zu einem Stellglied gibt. Insbesondere ist dazu vorgesehen, dass in der Tat aus den Ergebnissen nach Prüfung nur die als wahr-positiv qualifizierten (also als echt qualifizierten) Ergebnisse an die Stellregelverbindung zu einem Stellglied gegeben werden. Dies hat den Vorteil, dass das Steuern und Regeln, bzw. das Veranlassen von Aktionen nur auf Grundlage der wahr-positiven Ergebnisse, als auf Grundlage von als echt qualifizierten Ergebnissen erfolgt. Eine fehlerhafte Aktionsvermittlung oder Stellgliedsteuerung wird somit vermieden.

Erfindungsgemäß ist weiter vorgesehen, dass wenigstens das falsch-positive Ergebnis (also als artifiziell qualifizierte) Ergebnis an die Rückkopplung gegeben wird. Insbesondere ist vorgesehen, das falsch-positive Ergebnis, also das als artifiziell qualifizierte Ergebnis, und nur dieses, an die Rückkopplung zu geben. Dies hat den Vorteil, dass die Rückkoppelschleife vor allem zur Weiterbildung des Beobachtermoduls, bzw. vorzugsweise der im Beobachtermodul der Steuereinrichtung laufenden Algorithmen, wie den Störungsdetektionsalgorithmus und den Monitoralgorithmus, in der Lage sind zu verbessern, dahingehend, dass falsch-positive Ergebnisse reduziert werden.

Dem Konzept der Erfindung folgend wird das datenbasierte Überwachungsverfahren also kurzgesagt dahingehend verbessert, dass eine Stellregelverbindung aktiviert wird, möglichst nur oder in zunehmender Weise auf Grundlage von als echt qualifizierten Ergebnissen der Prüfung, während eine Rückkopplung allgemein zur Verbesserung vor allem des Beobachtermoduls oder nur im Hinblick auf die als falsch-positiv erkannten Ergebnisse ausgebildet ist, sodass diese zunehmend vermieden werden im Rahmen der Weiterbildung bzw. zunehmenden Optimierung des Beobachtermoduls beim datenbasierten Überwachungsverfahren für den Betrieb der Anzahl von ein oder mehreren Antriebseinrichtungen.

Das erfindungsgemäße Überwachungsverfahren ist somit in der Lage, mit einem angemessenen Datenaufwand betrieben zu werden und es hat zum anderen einen dennoch vergleichsweise breiten Einsatzspielraum. Insbesondere wird ein zu großer Daten- und Analyse-Aufwand wie auch eine zu hohe speziell zugeschnittene Ausrichtung des Überwachungsverfahren vermieden.

Insgesamt nutzt das datenbasierte Überwachungsverfahren somit den Vorteil von im Grundsatz bereits eingangs erläuterten an sich bekannten angedachten "BIG DATA"-Ansätzen für Überwachungsverfahren. Es ist jedoch mit der erfindungsgemäß vorgesehenen Diskriminierung der Ergebnisse im Rahmen der Prüfung eine "falsch-positiv"- oder "wahr-positiv"-Qualifizierung möglich. Damit wird es möglich einerseits die Stellregelverbindungen zu verbessern und andererseits die Lernrückkopplung zu verbessern; im Ergebnis also mit weniger Datenaufwand auszukommen. Dadurch wiederum werden vorteilhaft die im Rahmen der an sich bekannten "BIG DATA"-Konzepte erforderlichen großen Datenmengen reduziert, bzw. auf ein handhabbares Maß eingeschränkt. Ebenso wird ein Aufwand zur statistischen Analyse der Datenmengen reduziert, bzw. auf ein handhabbares Maß eingeschränkt. Außerdem gelingt dies gemäß dem Konzept der Erfindung mit dem Vorteil eines --kurz gesagt betitelbaren-- "Catch-all"-Ansatzes, bei dem auf individuelle und maßgeschneiderte Algorithmen in zunehmender Weise verzichtet werden kann.

Bislang ist es erforderlich, zur Identifikation eines tatsächlichen Zustandes entweder händisch von Fachpersonal eine Auswertung des Zustandes vornehmen zu lassen, oder aber sehr individuelle Modelle zu erstellen, wie eingangs erläutert, die auf ein spezifisches Fehlersymptom trainiert werden. Beispielsweise kann zur Überwachung einer Brennkraftmaschine unter anderem ein Algorithmus zur Erkennung des Ventilspiels entwickelt, trainiert und gepflegt werden. Dies bedeutet einen hohen Entwicklungs- und Pflegeaufwand. Sobald solche konzeptionell spezifischen Algorithmen und Trainingsmethoden auf eine andere Brennkraftmaschine angewendet werden sollen, müssen diese insofern maßgeschneiderten Algorithmen jedoch dann angepasst und überprüft werden.

Das Konzept der vorliegenden Erfindung basiert dagegen auf einem vergleichsweise breit anwendbaren kompatiblen Ansatz, der insofern eine falsch-/wahr-positiv-Erkennung mittels der Diskriminierungseinheit leistet und bei jeder Antriebseinheit für eine Stell- und Rückkoppelverbindung umsetzen kann, unabhängig von deren individuellen Gestaltung. Die Erfindung selbst im Konzept nutzt vor allem die falsch-positiv qualifizierten Ergebnisse im Rahmen einer Feedbackschleife zur Identifikationsverbesserung des Beobachters und insofern zum Trainieren der Überwachungsfunktion anhand des Feedbacks; das heißt primär der Reduktion der falsch-positiv-Ergebnisse; dies wirkt sich dann in zunehmend positiver Weise in Kombination mit der für die Stellgliedverbindung genutzten wahr-positiven Ergebnisse dahingehend aus, dass das Überwachungsverfahren vergleichsweise unspezifisch und mit wenig Datenaufwand trainiert werden kann.

Mit der Zeit führt diese Kombination also synergetisch dazu, dass die Lernfunktion falsch-positive Ergebnisse auf ein Mindestmaß reduziert und die Stellregelverbindung in zunehmend optimierter Weise nur wahr-positive Ergebnisse nutzt. Das erfindungsgemäße Konzept ist somit in sich konsistent und kann unabhängig von der individuellen Art der Antriebseinheit genutzt werden für das datenbasierte Monitor- und/oder Steuerverfahren.

Das Konzept der Erfindung führt vorteilhaft zu einem vergleichsweise universellen Algorithmus, der in der Lage ist, sich anbahnende Störungen einer Antriebseinheit in Bezug auf einen Betriebsparameter frühzeitig zu erkennen. Dadurch ist es möglich, Service-Spielräume und - Kapazitäten in verbesserter Weise unter Vermeidung von ungeplanten Ausfällen zugunsten von planbaren Service-Einsätzen zu nutzen. Auch lassen sich im Prinzip Service-Intervalle vergrößern und insgesamt Betriebsansätze optimieren; beispielsweise in Bezug auf Betriebsparameter wie Triebstoffverbrauch und Ressourcen-Aufwand.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Vorteilhaft ist vorgesehen, dass der Überwachungswert und das, insbesondere nur das, als falsch-positiv (artifiziell) qualifizierte Ergebnis an die Rückkopplungsverbindung zum Beobachtermodul gegeben wird. Beispielsweise kann insbesondere eine Langzeittrenderkennung realisiert werden. Es kann insbesondere zusätzlich oder alternativ eine sog. "Step Change"-Erkennung mit automatischer Nachrichtengenerierung etabliert werden. Dies verringert in vorteilhafter Weise den Rechenaufwand und bringt dennoch sehr wirksame Vorteile bei der Fehlererkennung.

Insbesondere kann die Rückkopplungsverbindung vom Stellglied zum Beobachtermodul als eine Lern-Rückkopplung ausgebildet sein.

Durch eine solche oder dergleichen "Feedback"-Schleife ist es vorteilhaft möglich, insbesondere optimiert in einem Trainingsprozess, die Anzahl der falsch-positiven (artifiziell) Ergebnisse beim Beobachter besonders effizient zu reduzieren.

Insbesondere ist vorgesehen:
- Anpassen des Monitoralgorithmus und/oder des Störungsdetektionsalgorithmus mit dem falsch-positiv (artifiziell) qualifizierten Ergebnis, und/oder
- Veranlassen einer Korrekturmaßnahme an der Antriebseinrichtung mittels dem Stellglied in Abhängigkeit vom wahr-positiv (echt) qualifizierten Ergebnis.

Insbesondere kann die Anpassung des Störungsdetektionsalgorithmus bei einem durch die Kontrollinstanz verneinten Vorliegen einer Störung so erfolgen, dass eine Spezifität des Störungsdetektionsalgorithmus zur Erkennung dieser Störung erhöht wird.

Insbesondere kann bei einem durch die Kontrollinstanz bestätigten Vorliegen der Störung von der Kontrollinstanz ein Behebungsindikationssignal zur Veranlassung eines Behebens der Störung ausgegeben werden.

Vorzugsweise ist vorgesehen, dass für das wahr-positiv (echt) qualifizierte Ergebnis ein Vorliegen der Störung impliziert bzw. bestätigt wird und/oder für das falsch-positiv (artifiziell) qualifizierte Ergebnis ein Nicht-Vorliegen der Störung impliziert bzw. bestätigt wird. Anders ausgedrückt, wird mit Vorteil versehen als Ergebnis der Prüfung entweder ein Vorliegen der Störung bestätigt oder ein Vorliegen der Störung verneint.

Vorzugsweise ist vorgesehen, dass das Überwachen der Betriebsparameter ein Überwachen der Betriebs- und Messgrößen umfasst unter Anwenden eines Beobachtersystems, insbesondere umfassend ein physikalisches Modell der Antriebseinrichtung mit den Betriebsgrößen zur Rekonstruktion von Zuständen der Antriebseinrichtung unter Berücksichtigung der Messgrößen.

Insbesondere kann der Störungsdetektionsalgorithmus ein Anwenden eines Kriteriensatzes mit einem oder mehreren Störungsidentifikationskriterien auf dem mindestens einen erfassten Betriebsparameter umfassen. Vorzugsweise kann vorgesehen sein, dass ein Ergebnis des Anwendens jeweils eines Störungsidentifikationskriteriums auf einen erfassten Betriebsparameter darauf hinweist, ob eine Störung der Antriebseinrichtung vorliegt.

Vorzugsweise ist vorgesehen, dass die Betriebsparameter als zeitdiskrete Betriebsdatenfolge erfasst werden, wobei die Störung als Störverlauf eines Betriebsparameters für die zeitdiskrete Betriebsdatenfolge erkannt wird. Vor allem die Weiterbildung des Verfahrens im Rahmen von Überwachungsfunktionen von zeitdiskreten Daten kann weiterbildend genutzt werden. Vorteilhaft kann dies im Rahmen einer weiteren Nutzung einer Langzeittrenderkennung bzw. Step-change-Erkennung mit automatischer Nachrichtengenerierung weiterbildend genutzt werden.

Vorzugsweise ist vorgesehen, dass der Störung ein technischer Störbereich der Antriebseinrichtung zugeordnet wird und/oder angezeigt wird, wobei die Störungsanzeige einen Störverlauf und einen Störungsbereich umfasst.

Insbesondere ist jedem Störungsidentifikationskriterium eine Störungsursprungsinformation zugeordnet, die Hinweise auf einen Ursprung der Störung enthält.

Vorteilhaft ist vorgesehen, dass das Störungsindikationssignal auf diejenige Störungsursprungsinformation hinweist, die demjenigen Störungsidentifikationskriterium zugeordnet ist, aufgrund dessen Ergebnis das Störungsindikationssignal gesendet wurde.

Vorzugsweise ist vorgesehen, dass das Verfahren zum Betreiben einer einzigen Antriebseinrichtung verwendet wird und das Anwenden des Störungsdetektionsalgorithmus einen Vergleich eines aktuellen Wertes eines Betriebsparameters mit zumindest einem Teil des über den Betriebszeitraum erfassten Verlaufs des Betriebsparameters beinhaltet.

Mit Vorteil versehen, können so beispielsweise allgemeine Überwachungsfunktionen auf Daten einer individuellen Antriebseinrichtung angewandt werden. Insbesondere hat es sich als vorteilhaft erwiesen, dass ein Vergleich von aktuellen Messwerten einer individuellen Antriebseinrichtung mit bestehenden Messwerten der individuellen Antriebseinrichtung, insbesondere also aus der eigenen Vergangenheit der individuellen Antriebseinrichtung, verglichen werden. Beispielsweise kann im Rahmen der allgemeinen Überwachungsfunktionen auf Daten einer individuellen Antriebseinrichtung ein bestehender Messwert aus einem vergangenen Zeitraum, beispielsweise singulär oder gemittelt aus vergangenen 3 Monaten, im Vergleich zu einem aktuellen Messwert in Bezug auf eine individuelle Antriebseinrichtung herangezogen werden.

Vorzugsweise ist zusätzlich oder alternativ vorgesehen, dass das Verfahren zum Betreiben einer Mehrzahl von Antriebseinrichtungen verwendet wird, für jede der Antriebseinrichtungen mindestens ein Betriebsparameter erfasst wird und das Anwenden des Störungsdetektionsalgorithmus einen Vergleich eines Wertes eines Betriebsparameters einer Antriebseinrichtung mit Werten des Betriebsparameters der restlichen der Mehrzahl der Antriebseinrichtungen beinhaltet.

Allgemeine Überwachungsfunktionen können so insbesondere auf Daten ganzer Flotten angewandt werden. Beispielsweise hat es sich als vorteilhaft erwiesen, dass ein Vergleich von Messwerten einer ganzen Flotte genutzt wird, um sog. "Ausreißer" zu identifizieren; d. h. Daten oder Datencluster bezogen auf eine individuelle Antriebseinrichtung, welche im Vergleich von Messwerten der ganzen Flotte signifikant oder über einen signifikanten Zeitraum dauerhaft abweichen.

Weiterhin wird die Aufgabe gelöst durch die Erfindung mit einem System des Anspruchs 11. Das System ist erfindungsgemäß ausgebildet für ein Überwachungsverfahren nach dem Konzept der Erfindung bzw. einer der Weiterbildungen für den Betrieb einer Anzahl von einer oder mehreren Antriebseinrichtungen, wobei eine Antriebseinrichtung eine Steuereinrichtung aufweist und ein Betriebsparameter der Antriebseinrichtung auf Grundlage von mittels der Steuereinrichtung erfassten Betriebsdaten für den Betriebsparameter überwacht wird. Erfindungsgemäß weist das System auf:
- die Anzahl von ein oder mehreren Antriebseinrichtungen, insbesondere eine Brennkraftmaschine, wobei die Steuereinrichtung mit mindestens einer Antriebseinrichtung signalverbunden ist, und
- eine Servereinrichtung einer Kontrollinstanz mit der Steuereinrichtung signalverbunden ist. Vorzugsweise ist vorgesehen, dass die Servereinrichtung der Kontrollinstanz aufweist:
   - ein Empfangsmodul zum Empfangen der Störungsanzeige;
   - ein Überprüfungsmodul zum Überprüfen des Ergebnisses der erkannten Störung durch die Kontrollinstanz nach Empfang der Störungsanzeige,
   - eine Diskriminierungseinheit, die das wahr-positiv (echt) qualifizierte Ergebnis an die Stellregelverbindung zu einem Stellglied gibt und das falsch-positiv (artifiziell) qualifizierte Ergebnis an die Rückkopplungsverbindung zum Beobachtermodul gibt.

Vorzugsweise ist vorgesehen, dass die Steuereinrichtung der Antriebseinrichtung aufweist:
- ein Erfassungsmodul, das ausgebildet ist, zum Erfassen und Überwachen der Betriebsparameter der Antriebseinrichtung mit einem Monitoralgorithmus eines Beobachtermoduls der Steuereinrichtung,
- ein Ausführungsmodul, das ausgebildet ist, zum Anwenden eines Störungsdetektionsalgorithmus einer Störungserkennung zum Erkennen einer Störung,
- ein Sendemodul, das ausgebildet ist, zum Senden einer Störungsanzeige aus der Störungserkennung für die Antriebseinrichtung basierend auf einem Ergebnis des Störungsdetektionsalgorithmus.

Vorzugsweise sind ein oder mehrere Anpassungsmodule und/oder Behebungsindikationsmodule vorgesehen und ausgebildet zum
- Anpassen des Monitoralgorithmus und/oder des Störungsdetektionsalgorithmus mit dem falsch-positiv (artifiziell) qualifizierten Ergebnis, und/oder
- Veranlassen einer Korrekturmaßnahme an der Antriebseinrichtung mittels dem Stellglied in Abhängigkeit vom wahr-positiv (echt) qualifizierten Ergebnis.

Insbesondere kann eine Anpassung des Störungsdetektionsalgorithmus in Abhängigkeit vom Ergebnis der Überprüfung erfolgen, wobei ein Behebungsindikationsmodul, das dazu ausgebildet ist, bei einem durch die Kontrollinstanz bestätigten Vorliegen der Störung von der Kontrollinstanz ein Behebungsindikationssignal zur Veranlassung eines Behebens der Störung ausgibt.

Ausführungsformen der Erfindung werden nun nachfolgend anhand der Zeichnung im Vergleich zum Stand der Technik, welcher zum Teil ebenfalls dargestellt ist, beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Weitere Vorteile, Merkmale und Einzelheiten der Erfindung ergeben sich aus der nachfolgenden Beschreibung den bevorzugten Ausführungsformen sowie anhand der Zeichnung; diese zeigt in:

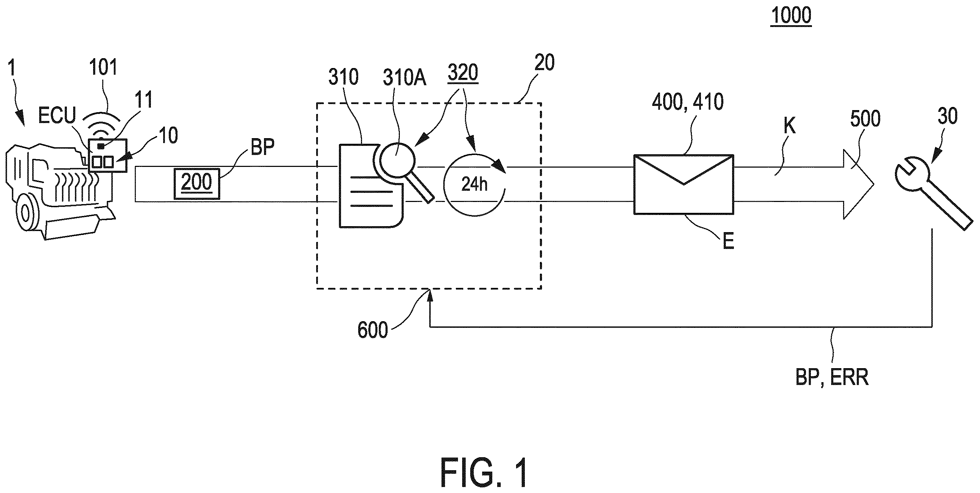

- Fig. 1: ein Diagramm zu einem grundsätzlichen Konzept eines datenbasierten Überwachungsverfahrens für den Betrieb einer Anzahl von Antriebseinrichtungen mit einer Steuereinrichtung und einem Beobachter umfassend eine Störungsanzeige und eine Rückkopplung zum Beobachter;

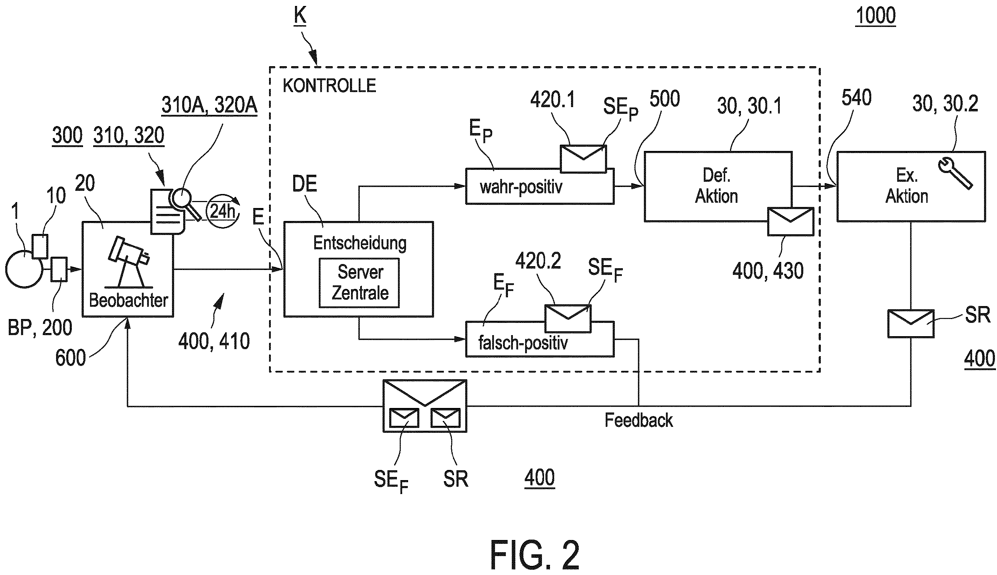

- Fig. 2: das im Rahmen einer besonders bevorzugten Ausführungsform erweiterte Konzept gemäß dem Konzept der Erfindung in einer schematischen Darstellung, wobei gemäß dem Konzept der Erfindung zwischen Beobachter einerseits sowie Stellregelverbindung und Rückkopplung andererseits eine Diskriminierungseinheit vorgesehen ist;

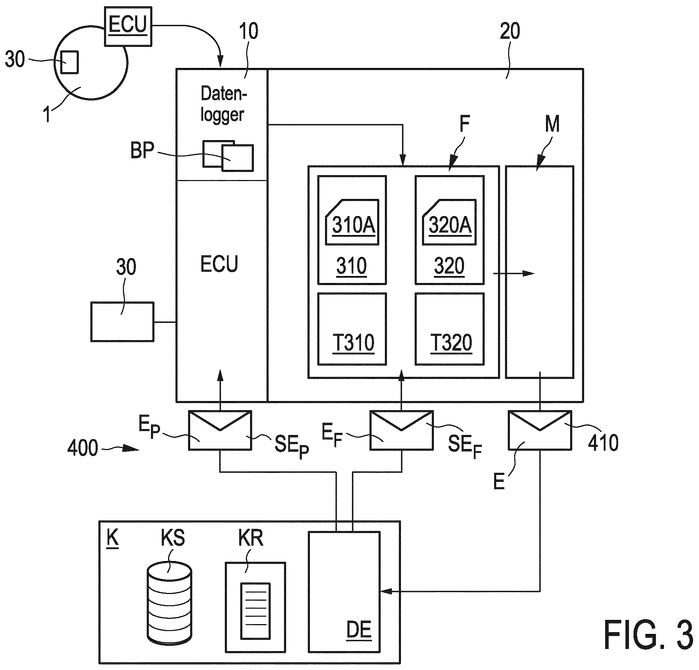

- Fig. 3: eine schematische Darstellung des Systems zur Umsetzung des datenbasierten Überwachungsverfahrens mit der Antriebseinrichtung, der Steuereinrichtung, einem Beobachter und einer Kontrollinstanz, wobei vorliegend die Diskriminierungseinheit bei dieser Ausführungsform in der Kontrollinstanz vorgesehen ist;

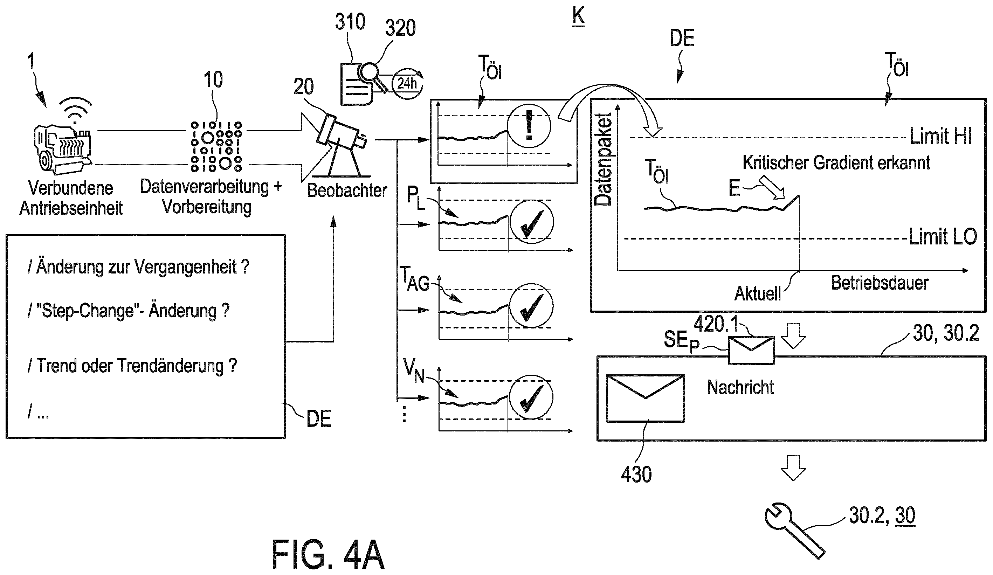

- Fig. 4A: ein erstes Beispiel eines datenbasierten Überwachungsverfahrens gemäß einer ersten abgewandelten bevorzugten Ausführungsform für den Betrieb einer Antriebseinrichtung in Form einer Brennkraftmaschine und mit einer Steuereinrichtung, einem Beobachter und einer Kontrollinstanz;

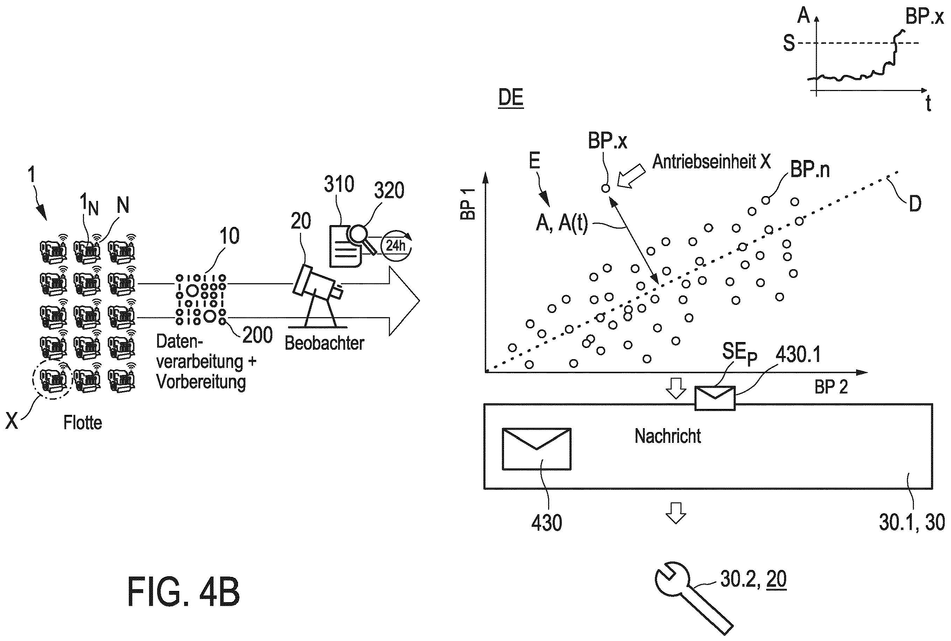

- Fig. 4B: ein zweites Beispiel eines datenbasierten Überwachungsverfahrens gemäß einer zweiten abgewandelten Ausführungsform für den Betrieb einer Anzahl von mehreren Antriebseinrichtungen und diese jeweils mit einer Steuereinrichtung, wobei gemäß der zweiten Abwandlung ein gemeinsamer Beobachter und Kontrollinstanz vorgesehen ist.

Fig. 1 zeigt eine Struktur eines datenbasierten Überwachungsverfahrens 1000 für den Betrieb einer einzelnen oder einer Anzahl von mehreren Antriebseinrichtungen 1, von denen eine hier vorliegend als eine Brennkraftmaschine beispielhaft dargestellt ist, und das in Fig. 2 weiter im Detail im Rahmen einer besonders bevorzugten Ausführungsform näher erläutert ist. Jede der Brennkraftmaschinen weist eine Steuerung ECU und einen hier vorgesehenen Datenlogger 10 auf, der in der Lage ist, Betriebsdaten 200 von Betriebsparametern BP der Antriebseinrichtung 1 zu erfassen; vorliegend werden die Betriebsdaten 200 als eine zeitdiskrete Betriebsdatenfolge transient über den Betriebsverlauf der Antriebseinrichtung 1 als Funktion der Zeit erfasst.

Die Antriebseinrichtung 1 weist eine Sendeinheit 11 auf, welche die entsprechenden, den Betriebsparametern BP zugeordneten Betriebsdaten 200 in einem Sendesignal 101 an ein Beobachtermodul 20 überträgt. Die Steuerung ECU, der Datenlogger 10 und die Sendeinheit 11 als auch das Beobachtermodul 20 können Teile einer integrierten oder systemischen Steuereinrichtung sein.

Das Beobachtermodul 20 ist in der Lage, die mit dem Sendesignal 101 übertragenen Daten 200 der Betriebsparameter BP, also die zeitdiskrete Betriebsdatenfolge der Betriebsdaten 200, über die Zeit zu überprüfen, bzw. zu überwachen. Der Beobachter, d. h. das Beobachtermodul 20, weist eine Beobachtersoftware 300 auf, die mehrere Module und Datenstrukturen 300 umfasst, die hier nicht im Einzelnen dargestellt sind. Teil der Module und Datenstrukturen 300 ist wenigstens eine Beobachtersoftware 310 mit einem entsprechenden Monitoralgorithmus 310A. Der Monitoralgorithmus 310A ist als Teil der Beobachtersoftware 310 maßgeblich ausgebildet, die zeitdiskrete Betriebsdatenfolge der Betriebsdaten 200 im Hinblick auf bestimmte Aspekte eines darin dargestellten Betriebsparameters BP zu überwachen; beispielsweise hier dauerhaft und ständig (wie dies symbolisch als "24h"-Überwachung dargestellt ist).

Eingesetzt werden solche Beobachter auch z. B. bei hier nicht dargestellten Ausführungsbeispielen mit einem Zustandsregler zur Rekonstruktion nicht messbarer Zustandsgrößen oder wie betreffend die vorliegende Ausführungsform bei zeitdiskreten Regelungen, bei denen die Messgröße nicht in jedem Zyklus aktualisiert werden kann bzw. in der Messtechnik als Ersatz für technisch oder wirtschaftlich nicht mögliche Messungen.

Einen Beobachter des Beobachtermoduls 20 zu nutzen, sieht vor, dass aus bekannten Eingangsgrößen (z. B. Stellgrößen oder messbaren Störgrößen) und Ausgangsgrößen (Messgrößen) eines beobachteten Referenzsystems die nicht messbaren Größen (Zustände) -hier Betriebsparameter BP-- rekonstruiert werden. Dazu ist in den hier nicht im Einzelnen dargestellten Modulen und Datenstrukturen 300 das beobachtete Referenzsystem als Modell M nachgebildet und es können mit einem Regler R die messbaren, und deshalb mit dem Referenzsystem vergleichbaren, Zustandsgrößen nachgeführt werden oder -wie vorliegend-- einfach nur überwacht werden.

Teil der Softwarestruktur 300 des Beobachtermoduls 20 ist auch eine in Fig. 2 näher gezeigte Störungserkennung 320 mit einem Störungsdetektionsalgorithmus 320A zum Erkennen einer Störung betreffend die Antriebseinrichtung 1. Das Anwenden des Störungsdetektionsalgorithmus 320A für die erfassten Betriebsdaten 200 in der Störungserkennung 320 ermöglicht das Erkennen einer Störung betreffend den Betriebsparameter BP der Antriebseinrichtung 1 aufgrund des spezifizierten Aspekts; dies wird in Bezug auf Fig. 2 und dann die Fig. 4A und Fig.4B noch näher erläutert.

Ausgehend von der Störungserkennung 320 ist als Teil einer automatischen Signalisierung 400 das Senden einer Störungsanzeige 410 vorgesehen, die basierend auf einem Ergebnis E des Störungsdetektionsalgorithmus 320A eine Störung der Antriebseinrichtung 1 in Bezug auf einen Betriebsparameter BP anzeigen kann.

Die Störungsanzeige 410 kann direkt oder über eine Kontrolle einer Kontrollinstanz K in einem Stellglied 30 empfangen werden und nach Überprüfen des Ergebnisses E der Störungsanzeige 410 beispielsweise in einer Servereinrichtung dazu führen, dass über die Stellregelverbindung 500 das Stellglied 30 zur Antriebseinrichtung 1 aktiviert wird. Die hier nur symbolisch dargestellte Stellregelverbindung 500 kann also einen Stellweg zum unmittelbaren Steuern und Regeln der Antriebseinheit 1 aktuieren und/oder eine Aktion triggern, die als Signal von einer externen Stelle empfangen wird und die Aktion ausführt - insoweit ist in der Fig. 1 die Stellregelverbindung 500 und vorliegend auch das Stellglied 30 abstrakt dargestellt. Im Rahmen der Beobachterstruktur ist es auch grundsätzlich möglich, eine hier ebenfalls symbolisch dargestellte Feedbackschleife einer Rückkopplung 600 im Sinne eines Rückkoppelns eines Betriebsparameters BP, z. B. eines IST-Wertes desselben und/oder eines Fehlers ERR an den Beobachter 20 zu veranlassen.

Fig. 2 zeigt eine in Bezug auf die vorgenannte Beobachterstruktur des Überwachungsverfahrens 1000 konkret eine gemäß dem Konzept der Erfindung verbesserte bevorzugte Ausführungsform einer Beobachterstruktur zur Umsetzung eines datenbasierten Überwachungsverfahrens 1000 gemäß dem Konzept der Erfindung.

Gemäß der in Bezug auf Fig. 1 erläuterten Vorgehensweise ist das datenbasierte Überwachungsverfahren 1000 vorliegend erläutert in Bezug auf eine Antriebseinrichtung 1 mit einer Steuereinrichtung umfassend eine Steuerung ECU, einen Datenlogger 10, der Betriebsdaten 200 umfassende Betriebsparameter BP einem Beobachtermodul 20 zur Verfügung stellt. Das Beobachtermodul 20 umfasst als Teil seiner Module und Datenstrukturen 300 eine Beobachtersoftware 310 oder sonstigen Monitor und eine Störungserkennung 320.

Als Teil einer Signalisierung 400 kann eine Störungsanzeige 410 automatisiert mit einem Ergebnis E des Störungsdetektionsalgorithmus 320A auch hier einer Kontrollinstanz K zugeführt werden zur Überprüfung des Ergebnisses E der Störungsanzeige 410, um dann nach Überprüfung des Ergebnisses E eine Stellregelverbindung 500 und/oder eine Rückkopplung 600 zu aktivieren. Bei dem Ergebnis E des Störungsdetektionsalgorithmus 320A kann es sich vorliegend um eine automatisierte Nachricht handeln, die übermittelt wird.

Gemäß dem Konzept der Erfindung ist bei der vorliegenden Ausführungsform der Fig. 2 allerdings die Kontrollinstanz K in besonderer Weise vorteilhaft ausgestaltet mit einer Diskriminierungseinheit DE, die das Ergebnis E vom Beobachtermodul 20 empfängt. Diese Diskriminierungseinheit DE kann beispielsweise in einer Zentrale oder einem zentralen Server angesiedelt sein, oder mit einem geeigneten anderen Server verbunden sein. Insofern kann für diese Diskriminierungseinheit DE und die Entscheidung betreffend das Ergebnis E ausreichend Rechenkapazität und Datenhintergrund zur Verfügung stehen. Die Diskriminierungseinheit DE trifft eine Entscheidung aufgrund der insofern angemessenen Prüfung des Ergebnisses E mit ausreichend Rechenkapazität und Datenhintergrund.

Das Ergebnis E wird in der Diskriminierungseinheit DE geprüft und eingestuft nach einem Kriterium bzw. in eine Kategorie für ein falsch-positives Ergebnis E_{F} bzw. ein wahr-positives Ergebnis E_{P}. Nach der Prüfung auf ein als falsch-positives Ergebnis E_{F} --das heißt dahingehend, ob das Ergebnis E als artifiziell erkannt wird-- oder auf ein wahr-positives Ergebnis E_{P} --das heißt, ob das Ergebnis E als echt erkannt wird -- das Ergebnis E qualifiziert als falsch-positives Ergebnis E_{F} zur Weiterverarbeitung im unteren Zweig oder wahr-positives Ergebnis E_{P} im oberen Zweig, wie dies in Fig. 2 dargestellt ist.

Als Teil der insofern zweisträngigen automatischen Signalisierung 400 ist ein entsprechendes Qualifizierungssignal SE_{P} bzw. SE_{F} vorgesehen, das vorliegend zudem in unterschiedlicher Weise verwendet wird.

Das auf dem echten -also wahr-positiven-- Ergebnis E_{P} basierende wahr-positive Signal SE_{P},nämlich in dieser Ausführungsform nur das wahr-positiv-Signal SE_{P} basierend auf dem als echt qualifizierten wahr-positiv-Signal SE_{P}-- wird in einem ersten Signalisierungsstrang 420.1 der Stellregelverbindung 500 zur Verfügung gestellt, um dann ein Stellglied 30 zu stellen.

Das auf dem artifiziellen --also falsch-positiven-- Ergebnis E_{F} basierende falsch-positive Signal SE_{F} wird in einem zweiten Signalisierungsstrang 420.2 der Rückkopplung 600 zum Beobachtermodul 20 zur Verfügung gestellt; nämlich in diesem Ausführungsbeispiel nur das falsch-positive Signal SE_{F}-

In der vorliegenden Ausführungsform weist das Stellglied 30 ein Service- und/oder Überprüfungsmodul 30.1 auf. Das Service- und/oder Überprüfungsmodul 30.1 definiert in automatisierter Weise eine Service- oder Überprüfungsaktion und gibt diese als Teil der automatischen Signalisierung 400 in einem ersten Signalisierungsstrang 420.1 aus dem insofern ersten Modul als ein Service- und/oder Überprüfungsmodul 30.1 weiter. Die Service- oder Überprüfungsaktion 540 kann von oder mit einem Personaleinsatz beeinflusst sein. Die Service- oder Überprüfungsaktion 540 kann auch, aber nicht nur, an ein Servicepersonal gehen. Die Service- oder Überprüfungsaktion 540 wird insbesondere als ein Servicesignal 430 an ein Ausführungsmodul 30.2 der Serviceeinheit im Sinne eines Stellglieds 30 weitergegeben. Das Stellglied umfasst insofern ein zweites Modul als ein Ausführungsmodul 30.2. Das Ausführungsmodul 30.2 sorgt für die Ausführung der Service- oder Überprüfungsaktion 540.

Das Ausführungsmodul 30.2 übermittelt nach Durchführen einer definierten, ggfs. vordefinierten Service- oder Überprüfungsaktion 540 ein Feedback-Signal SR. Das Feedback-Signal SR wird als Teil der Signalisierung 400 mit dem zuvor genannten falsch-positiv-Signal SE_{F} zusammengeführt.

Das Feedback-Signal SR wird als Teil der Signalisierung 400 mit dem zuvor genannten falsch-positiv-Signal SE_{F} aus dem zweiten Signalisierungsstrang 420.2 im Rahmen der Rückkopplung 600 zum Beobachtermodul 20 übermittelt. Das Beobachtermodul 20 erhält also ein "Feedback" nicht nur zur ausgeführten Service- oder Überprüfungsaktion 540, sondern auch zum zuvor genannten falsch-positiv-Signal SE_{F} aus zweiten Signalisierungsstrang 420.2.

Das Beobachtermodul 600 erhält also nicht nur den Umsetzungsstatus im Sinne eines IST-Wertes des Betriebsparameters BP aus dem Ausführungsmodul 30.2, sondern auch eine Information über die in der Diskriminierungseinheit DE sozusagen "ausgefilterten" artifiziellen --also falsch-positiven-- Ergebnisse E_{F}.

Im Ergebnis stellt die Ausführungsform der Fig. 2 ein daten-basiertes Überwachungsverfahren 1000 dar für den Betrieb einer Anzahl von einer oder mehreren Antriebseinrichtungen 1, insbesondere für den Betrieb einer Brennkraftmaschine, wobei eine Antriebseinrichtung 1 eine Steuerung aufweist und ein Betriebsparameter der Antriebseinrichtung auf Grundlage von mittels der Steuereinrichtung erfassten Betriebsdaten für den Betriebsparameter überwacht wird, aufweisend die Schritte:
- Überwachen des Betriebsparameters der Antriebseinrichtung mit einem Monitoralgorithmus für die Betriebsdaten, insbesondere eines Monitoralgorithmus 310A eines Beobachtermoduls der Steuereinrichtung,
- Anwenden eines Störungsdetektionsalgorithmus für die erfassten Betriebsdaten einer Störungserkennung zum Erkennen einer Störung betreffend den Betriebsparameter der Antriebseinrichtung,
- Senden einer Störungsanzeige aus der Störungserkennung für die Antriebseinrichtung basierend auf einem Ergebnis des Störungsdetektionsalgorithmus 320A;
- Empfangen der Störungsanzeige und Überprüfen des Ergebnisses, insbesondere Empfangen und Überprüfen in einer Servereinrichtung einer Kontrollinstanz,
- Aktivieren einer Stellregelverbindung zur Antriebseinrichtung in Bezug auf den Betriebsparameter und Rückkoppeln eines Überwachungswertes für den Betriebsparameter an eine Rückkopplungsverbindung zum Monitoralgorithmus.

Gemäß dem Konzept der Erfindung ist dabei vorgesehen, dass
das Ergebnis nach Prüfung als falsch-positiv (artifiziell) oder wahr-positiv (echt) qualifiziert wird, und
- die Störungserkennung eine Diskriminierungseinheit aufweist, die
   - das, insbesondere nur das, als wahr-positive (echt) qualifizierte Ergebnis an die Stellregelverbindung zu einem Stellglied gibt und
   - das, insbesondere nur das, als falsch-positiv (artifiziell) qualifizierte Ergebnis an die Rückkopplungsverbindung zum Beobachtermodul gibt.

Der Überwachungswert und das, insbesondere nur das, als falsch-positiv (artifiziell) qualifizierte Ergebnis wird vorliegend an die Rückkopplungsverbindung zum Beobachtermodul gegeben.

Vorliegend ist die Rückkopplungsverbindung vom Stellglied zum Beobachtermodul zudem als eine Lern-Rückkopplung ausgebildet, wobei das Verfahren weiter die Schritte aufweist:
- Anpassen des Monitoralgorithmus und/oder des Störungsdetektionsalgorithmus mit dem falsch-positiv (artifiziell) qualifizierten Ergebnis, und/oder
- Veranlassen einer Korrekturmaßnahme an der Antriebseinrichtung mittels dem Stellglied in Abhängigkeit vom wahr-positiv (echt) qualifizierten Ergebnis. Konkret kann die Anpassung des Störungsdetektionsalgorithmus bei einem durch die Kontrollinstanz verneinten Vorliegen einer Störung so erfolgen, dass eine Spezifität des Störungsdetektionsalgorithmus zur Erkennung dieser Störung erhöht wird. Es kann bei einem durch die Kontrollinstanz bestätigten Vorliegen der Störung von der Kontrollinstanz ein Behebungsindikationssignal zur Veranlassung eines Behebens der Störung ausgegeben werden. Anders ausgedrückt wird für das wahr-positiv (echt) qualifizierte Ergebnis ein Vorliegen der Störung impliziert bzw. bestätigt und/oder für das falsch-positiv (artifiziell) qualifizierte Ergebnis ein Nicht-Vorliegen der Störung impliziert bzw. bestätigt wird. D. h. das Ergebnis der Prüfung wird entweder ein Vorliegen der Störung bestätigen oder ein Vorliegen der Störung verneinen.

Das Beobachtermodul 600 wird darauf aufbauend in die Lage versetzt, einen Lern-Algorithmus umzusetzen, der als "verbesserter Filter" über die in der Kontrollinstanz vorgesehene Diskriminierungseinheit DE für das Auftreten von falsch-positiv-Ergebnissen E_{F} realisiert ist. Das Konzept der Erfindung wird in dieser Ausführungsform insofern dadurch realisiert, dass Betriebsdaten 200 für Betriebsparameter BP als zeitdiskrete Folge ständig überwacht werden und jede Störung oder Unregelmäßigkeit erkannt wird. Dies erfolgt in der Diskriminierungseinheit DE mit einem insofern modellbasierten Filtermodell, das eine Plausibilitätsüberprüfung der Ergebnisse E ermöglicht, wie dies im Folgenden erläutert ist.

Fig. 3 zeigt dazu in etwas abgewandelter Weise --aber grundsätzlich ähnlich-- den Aufbau eines Beobachtersystems für das Überwachungsverfahren 1000 in der Struktur, wobei hier auf die zuvor genannten Erläuterungen unter Benutzung gleicher Bezugszeichen verwiesen wird.

Im Detail ist vorliegend die Diskriminierungseinheit DE der Kontrollinstanz K gezeigt, welche räumlich entfernt vom Beobachtermodul 20 ausgebildet ist mit oder in einer als Server ausgebildeten Recheneinheit KR mit Speicher KS der Kontrollinstanz K. Die Signalisierung 400 erfolgt somit vor allem kabellos zwischen Kontrollinstanz K und Beobachtermodul 20. Die Signalisierung ist als Teil des Datenloggers 10 und des Beobachtermoduls 20 realisiert, nämlich als Verbindung kann diese implementiert werden zu oder in einer geeigneten Steuereinrichtung; dies kann auch mit der Steuerung ECU der Brennkraftmaschine 1 sein oder diese umfassen, wie dies symbolisch in Fig. 3 dargestellt ist.

In Abwandlung zu der in Fig. 2 dargestellten Struktur wird vorliegend das wahr-positive Ergebnis E_{P} im Rahmen einer wahr-positiv-Signalisierung SE_{P} der Stellregelverbindung 500 zu einem Stellglied mittels der Fahrzeugsteuerung ECU übermittelt. In diesem Fall ist somit das Stellglied 30 mittels der Steuerung ECU als Aktor am Fahrzeug ausgebildet, um das Fahrzeug mit der Veränderung der Betriebsparameter über das Stellglied 30 entsprechend dem wahr-positiv-Ergebnis E_{P} bereits zu steuern. Das falsch-positiv-Ergebnis E_{F} wird im Rahmen der zuvor erläuterten falsch-positiv-Signalisierung SE_{F} dem Beobachtermodul 20 zur Verfügung gestellt und zwar vorliegend vor allem der Beobachtersoftware oder sonstigem Monitor 310 und/oder der Störungserkennung 320, nämlich zur Verbesserung im Rahmen einer Lernschleife des dort hinterlegten Monitoralgorithmus 310A, bzw. Störungsdetektionsalgorithmus 320A.

Im Folgenden wird beispielhaft erläutert -- aufbauend auf dem zuvor erläuterten Konzept-- wie eine Implementierung von grundlegenden Regeln zur Verminderung von falsch-positiv-Ergebnissen E_{F} erfolgen kann im Rahmen der Algorithmen 310A, 320A. Es wird auch beispielhaft erläutert, wie diese trainiert werden können, um einen hier dargestellten entsprechenden Filter F auszubilden, der zunehmend verbessert ist. Dies kann im Rahmen des bzw. für den Monitoralgorithmus 310A und/oder im Rahmen des bzw. für den Störungsdetektionsalgorithmus 320A umgesetzt werden. Insgesamt führt das Konzept gemäß den Abläufen in den Ausführungsbeispielen nach Fig. 2 und Fig. 3 dazu, dass eine automatische Erkennung von Serviceaktivitäten veranlasst werden kann, wie anhand von Fig. 2 erläutert ist. Im Ergebnis wird der Filter F -- mit der Zeit und zunehmendem Training -- zunehmend weniger falsch-positiv-Ergebnisse E_{F} durchlassen, sodass die Übermittlung der Ergebnisse E mittels der zuvor erläuterten Störungsanzeige 410 bereits eine hohe Güte aufweist.

Dazu ist ein hier symbolisch dargestelltes Modell M des Beobachtermoduls 20 vorgesehen, das eine Plausibilitätsüberprüfung der Ergebnisse E ermöglicht. Die Plausibilitätsüberprüfung sieht vor, dass gültige Grundregeln im Sinne von funktionalen Zusammenhängen, bzw. Korrelationen, geprüft werden zwischen den zur Verfügung stehenden Betriebsparametern bzw. der transienten zeitdiskreten Abfolge der Betriebsparameter. So kann im Rahmen des Beobachtermoduls 20 ein Überwachen der Betriebsparameter BP, wie ein Überwachen der Betriebs- und Messgrößen, erfolgen. Dies kann unter Anwenden eines Beobachtersystems des Überwachungsverfahrens 1000 umfassend ein physikalisches Modell M der Antriebseinrichtung mit den Betriebsparameter BP zur Rekonstruktion von Zuständen der Antriebseinrichtung unter Berücksichtigung der Betriebsparameter BP erfolgen.

Beispiele dazu werden nachfolgend in Bezug auf Fig. 4A und Fig. 4B dargestellt und beispielhaft erläutert. Insofern wird für die nachfolgenden Figurenbeschreibung Bezug genommen auf die zuvor genannten Bezugszeichen, wobei für gleiche oder ähnliche Teile oder Teile gleicher oder ähnlicher Funktion die gleichen Bezugszeichen verwendet werden.

Ein in Fig. 4A dargestelltes erstes Beispiel eines Modellfilters in dem Modell M umfasst beispielsweise die Prüfung einer Korrelation zwischen den Betriebsparametern BP für einen "Motorstart" und eine "Öltemperatur" T_{ÖL}. Anhand von Fig. 4A ist dazu eine erste beispielhafte Möglichkeit der Umsetzung in Bezug auf eine der vorgenannten Ausführungsformen eines Überwachungsverfahrens 1000 erläutert gemäß dem erfindungsgemäßen Konzept in Bezug auf eine einzelne Antriebseinheit 1, wie eine Brennkraftmaschine, unter Bezug auf die vorgenannten Bezugszeichen an einem konkreten Beispiel eines Datensatzes aus dem Datenlogger 10, der in Fig. 4A näher dargestellt sind.

In Fig. 4A umfasst die Störungsanzeige 410 konkret eine zeitdiskrete Datenabfolge für Betriebsparameter Öltemperatur T_{ÖL}, Ladedruck P_{L}, Abgastemperatur T_{AG} und Leerlaufgeschwindigkeit V_{N} für die Antriebseinheit 1.

Diese Betriebsparameter werden qualifiziert im Rahmen des Beobachtermoduls 20 anhand eines Modells M. Das Überwachungsverfahren 1000 sieht bei diesem Beispiel somit vor, dass das Verfahren zum Betreiben einer einzigen Antriebseinrichtung 1 verwendet wird; und das Anwenden des Störungsdetektionsalgorithmus einen Vergleich eines aktuellen Wertes eines Betriebsparameters mit zumindest einem Teil des über den Betriebszeitraum erfassten Verlaufs des Betriebsparameters beinhaltet.

Eine zuvor erläuterte Diskriminierungseinheit DE kann ein Ergebnis E zunächst produzieren und prüfen. Dazu sind anhand von Daten und Rechenkapazität eine oder mehrere Fragen zu prüfen bzw. Änderungen zu erkennen, wie beispielsweise in dem Bezugszeichen zur Diskriminierungseinheit DE angegeben:
- Sind in den Daten einer individuellen Antriebseinheit Veränderungen zur Vergangenheit erkennbar?
- Wurde eine signifikante "Step Change"- Änderung erkannt?
- Wurde ein Trend bzw. eine Trendänderung erkannt?

Die Diskriminierungseinheit DE kann die Ergebnisse zu den Erkennungen auch einstufen nach einem Kriterium bzw. in eine Kategorie für ein falsch-positives Ergebnis E_{F} bzw. ein wahr-positives Ergebnis E_{P}.

Konkret ist vorliegend in Fig. 4A dazu (symbolisch mit einem Haken) angegeben, wie gemäß dem zuvor erläuterten Modellfilter M einige Parameter als normal, bzw. im Nennbereich erkannt bzw. eingestuft werden. Dies trifft vorliegend für den Ladedruck P_{L}, die Abgastemperatur T_{AG} und die Idle-Geschwindigkeiten (Nenngeschwindigkeit V_{N}) zu. Der Betriebsparameter für die Öltemperatur T_{ÖL} scheint jedoch eine Auffälligkeit zu zeigen, wie dies in der vergrößerten Darstellung für T_{ÖL} in Fig. 4A gezeigt ist. Für diese Erkenntnisse bzw. Entscheidung hat die Diskriminierungseinheit DE aufgrund einer insofern angemessenen Prüfung eines Ergebnisses E ausreichend Rechenkapazität und Datenhintergrund.

Ein solches an sich positives Ergebnis E kann im Rahmen einer automatisierten Störungsanzeige 410 zusammen mit dem Betriebszustand der Brennkraftmaschine (als die hier dargestellte Form einer Antriebseinheit 1) zugeführt werden. Im Unterschied zu dem vorgenannten Betriebszustand eines Startvorgangs würde hier von einer Diskriminierungseinheit DE in der Kontrollinstanz K als Ergebnis E erkannt werden, dass die Brennkraftmaschine der Antriebseinheit 1 offensichtlich in einem Arbeitsbetrieb befindlich ist und trotzdem eine kritische Gradientenentwicklung bei der Öltemperatur besteht, wenn auch noch innerhalb der begrenzenden Schwellwertbereiche Limit_{LO} und Limit_{HI}.

Die Diskriminierungs-Einheit DE würde dieses Ergebnis somit als wahr-positiv, also echt und nicht artifiziell kennzeichnen.

Ein entsprechendes wahr-positiv-Signal SE_{P} kann beispielsweise die Mitteilung enthalten, dass die Brennkraftmaschine einen kritischen Gradienten in der Öltemperatur T_{ÖL} aufweist. Es kann das dazu in DE gezeigte Datenpaket um den Betriebsdauerzeitpunkt enthalten sein. Es kann die Anweisung enthalten sein, den Betriebszustand der Brennkraftmaschine zu überprüfen.

Das Ergebnis würde somit im Rahmen einer Signalisierung 400 mit einer Störungsanzeige 410 mit dem wahr-positiv-Signal SE_{P} als echtes -also wahr-positiven-- Ergebnis E_{P} der Stellverbindung 500 mit einem Servicesignal 430 zur Verfügung gestellt werden, woraufhin in diesem Fall ein Stellglied 30 im Sinne einer automatisierten Servicesignalisierung erfolgt, wie zuvor erläutert. Dargestellt ist vorliegend in Fig. 4A auch nur der Pfad der wahr-positiv-Signalisierung 420.1 mit dem wahr-positiv-Ergebnis E_{P}.

Gleichwohl wird im Anschluss an die Serviceaktion ein IST-Zustand im Sinne einer Signalrückkopplung SR erfolgen. Eine falsch-positiv-Signalisierung SE_{F} in Bezug auf ein falsch-positiv-Signal E_{F} und eine entsprechende Signalisierung 420.2 und eine Rückkopplung 600 erfolgt vorliegend nicht, da die Überprüfung in der Diskriminierungseinheit eben eine wahr-positive, als echt qualifizierte, Prüfung vollzogen hat.

Insofern ist das in Fig. 4A dargestellte Ergebnis E ein anderes als in dem nachfolgend erläuterten Beispiel bei einem Fahrzeugstart. Für die Korrelation der Betriebsparameter BP "Motorstart" und "Öltemperatur" T_{ÖL} wird dazu eine zeitlich steigende Entwicklung der Öltemperatur zwar zunächst als positiv erkannt aber nicht als echt -also wahr-positives-- Ergebnis E_{P} qualifiziert; d.h. bei einem Startvorgang und der zeitlichen Entwicklung der Öltemperatur als steigend wird dies als ein Normalbetrieb eingestuft. Im Sinne einer Signalisierung 400 würde dies für den ersten Signalisierungsstrang 420.1 ungeeignet, also als ein artifizielles -also falsch-positives-- Ergebnis E_{F} qualifiziert. Ein Ergebnis E, das einen auffälligen Öltemperaturanstieg beinhaltet, würde somit NICHT zur Weiterleitung einer Störungsanzeige 410 für den ersten Signalisierungsstrang 420.1 führen, im Falle eines Motorstarts - vielmehr im Sinne einer Signalisierung 400 einem zweiten Signalisierungsstrang 420.2 zur Rückkopplung 600 zugeführt.

Sollte ein Motorstart dagegen nicht vorliegen und gleichwohl ein auffälliger Öltemperaturanstieg als Teil des Ergebnisses E gemeldet werden, würde dieses Ergebnis E --wie anhand von Fig. 4A erläutert-- dann auch als positiv-aber als wahr-positives Ergebnis E_{P} qualifiziert und im Zuge der Störungsanzeige 410 weitergeleitet werden an ein Stellglied 30. Dieses Beispiel zeigt, wie die Fallzahl der artifiziellen -also falsch-positives-- Ergebnisse E_{F} in der Stellregelverbindung 500 reduziert werden kann und gleichzeitig die Module und Datenstrukturen 300 wie Beobachtersoftware oder sonstigen Monitor 310 und Störungserkennung 320 trainiert werden können.

Gemäß einem zweiten Beispiel eines Modellfilters in dem Modell M kann die Erkennung eines artifiziellen -also falsch-positiven-- Ergebnisse E_{F} beispielsweise umfassen, dass eine Kombination von Informationen betreffend den Standort der Antriebseinheit 1 (z.B. per GPS verfügbar) und dem Betriebsparameter BP verfügbar ist. Es kann die Information verfügbar sein, dass die Antriebseinheit 1 nicht läuft und die Information, dass ein leichter Stufenanstieg des Öldrucks zwischen den Zuständen eines "Engine-Stop" zum "Engine-Start" zu vermelden ist. Dies könnte einen Ölfilterwechsel signalisieren.

In dem Fall kann dies also nach Maßgabe eines Modells M des Filters, wie zuvor erläutert, eine Störungsanzeige 410 NICHT auslösen. Zwar würde ein Stufenanstieg des Öldrucks P_{ÖL} zunächst als positiv erkannt; aber nicht als echt -also wahr-positives-- Ergebnis E_{P} qualifiziert. D.h. zwischen den Zuständen eines "Engine-Stop" zum "Engine-Start" würde die zeitliche Entwicklung eines Stufenanstiegs des Öldrucks P_{ÖL} als ein normaler Ölfilterwechsel eingestuft. Im Sinne einer Signalisierung 400 wäre dies für den ersten Signalisierungsstrang 420.1 ungeeignet, also als ein artifizielles -also falsch-positives-- Ergebnis E_{F} qualifiziert.

Sollte jedoch eine der vorgenannten Bedingungen nicht vorliegen, kann eine entsprechende Störungsanzeige 410 für den ersten Signalisierungsstrang 420.1 zur Auslösung einer Filterwechselaktion führen über das Stellglied 30 erfolgen.

Der Ablauf kann nach zuvor erläuterter Signalisierung 400 betreffend ein falsch-positives Signal SE_{F} und ein wahr-positiv-Signal SE_{P} die Monitor- und Störungsdetektionsalgorithmen 310A, 320A im Sinne eines Algorithmustrainings verbessern. Ein entsprechender Trainingsalgorithmus T310, T320 kann vorgesehen sein, um die Erfassungsrate für falsch-positive Ergebnisse zu erhöhen, und damit die Anzahl von falsch-positiven Ergebnissen zu verringern.

Im Sinne der Fig. 3 kann beispielsweise das Modellfiltermodul Empfehlungen ausgeben als auch das Stellglied 30 veranlassen, Aktionen vorzunehmen.

Ein solcher Modellfilter kann vorliegend in der Steuerung, bzw. dem Beobachtermodul 20 implementiert sein, da er sich mit vergleichsweise wenig Rechenaufwand realisieren lässt. Komplexere Prüfungen der Ergebnisse E auf artifiziell oder echt werden jedoch in diesem Ausführungsbeispiel als Teil der Diskriminierungseinheit DE in der Kontrollinstanz K angeordnet.

Gleichwohl kann eine Diskriminierungseinheit auch, wie erläutert, Teil des Beobachtermoduls 20 sein und im Anschluss an einen Modellfilter M oder direkt nach dem Filtermodul F (umfassend den Monitor- und Störungsdetektionsalgorithmus 310A, 320A) angeordnet sein.

Ein drittes Beispiel kann etwa die Kombination von Betriebsparametern BP für eine im Folgenden erläuterte Situation betreffen: Ein Einlassdruck weist einen auffälligen Druckverlust auf, während vor dem Turbolader ein konstanter Druck vorliegt als auch eine konstante Einlassluft-Temperatur vorliegt.

In dem Fall würde dies eine Störungsanzeige 410 auslösen, da diese Kombination als positiv erkannt und auch als echt -also wahr-positives-- Ergebnis E_{P} qualifiziert würde. Es kann eine entsprechende Störungsanzeige 410 für den ersten Signalisierungsstrang 420.1 erfolgen und in dem Service- und/oder Überprüfungsmodul 30.1 darauf erkannt werden, dass eine 70%-ige Wahrscheinlichkeit vorliegt, dass ein Turboladerproblem besteht.

Dies kann auf der Annahme beruhen, dass offensichtlich der Turbolader zwar mit konstantem Druck und bei konstanter Einlasstemperatur Einlassluft ansaugt, aber nicht den Druck bringt, den er für einen Einlassdruck am Motor bringen sollte.

Das Stellglied 30 im Sinne eines Aktuators der Stelleinheit kann somit, abhängig von der Betriebssituation der Antriebseinheit 1, eine Drosselstellung für die Einlassluft am Eingangskrümmer vorsehen, um den Einlassdruck zu halten oder den Turbolader bei höheren Drehzahlen betreiben zu können. Gleichzeitig kann das Ausführungsmodul 30.2 eine Empfehlung ausgeben, den Turbolader zu überprüfen.

Solche und andere als die zuvor beispielhaft genannten Betriebsparameter BP können als zeitdiskrete Betriebsdatenfolge erfasst werden, wobei die Störung als Störverlauf eines Betriebsparameters BP für die zeitdiskrete Betriebsdatenfolge erkannt wird; etwa mittels einer Schwellwertanalyse der Betriebsdaten für einen Betriebsparameter BP.

Es kann dazu der Störung auch ein technischer Störbereich der Antriebseinrichtung zugeordnet und/oder angezeigt werden, wobei die Störungsanzeige Störverlauf und Störungsbereich umfasst. Beispielsweise kann jedem Störungsidentifikationskriterium eine Störungsursprungsinformation zugeordnet werden, die Hinweise auf einen Ursprung der Störung enthält; und das Störungsindikationssignal auf diejenige Störungsursprungsinformation hinweist, die diejenigem Störungsidentifikationskriterium zugeordnet ist, aufgrund dessen Ergebnis das Störungsindikationssignal gesendet wurde.

Anhand von Fig. 4B ist ein weiteres viertes Beispiel eines Modellfilters in dem Modell M erläutert. Fig. 4B zeigt dazu eine weitere beispielhafte Möglichkeit der Umsetzung in Bezug auf eine der vorgenannten vorteilhaften Ausführungsformen eines Überwachungsverfahrens 1000; vorliegend in Bezug auf eine Flotte mit einer Mehrzahl von Antriebseinheiten.

Fig. 4B zeigt dazu in einer Variante wiederum die Abläufe in einer Diskriminierungseinheit DE einer Kontrollinstanz K in Bezug auf eine Flotte einer Mehrzahl von Antriebseinheiten 1.

In diesem Fall wird als Störungsanzeige 410 ein Ergebnis E übermittelt, bei dem in Bezug auf einen ersten bestimmten Betriebsparameterwert BP1 und einen zweiten bestimmten Betriebsparameterwert BP2 eine Korrelation derselben aufgetragen ist; nämlich für jede der Antriebseinheiten 1_{N}. Insofern sind die entsprechenden Betriebsparameter BP vorliegend bezeichnet als BPₙ.

Erkennbar ist, dass der Betriebsparameter BPₓ für die im Unterschied zu den Antriebseinheiten N gekennzeichnete Antriebseinheit X der Flotte deutlich außerhalb des Ensembles von Betriebsparametern BPₙ liegt. D.h. das Verfahren zum Betreiben einer Mehrzahl von Antriebseinheiten N wird verwendet und für jede der Antriebseinheiten N wird mindestens ein Betriebsparameter BPₙ erfasst. Das Anwenden des Störungsdetektionsalgorithmus umfasst einen Vergleich eines Wertes eines Betriebsparameters BPₓ einer Antriebseinrichtung X mit Werten des Betriebsparameters BPₙ der restlichen der Mehrzahl der Antriebseinrichtungen N.

Die Qualifizierung des Betriebsparameter BPₓ im Unterschied zu den Betriebsparametern BPₙ des Ensembles von Betriebsparametern kann erfolgen über ein Abstandsmaß A, das hier symbolisch und lediglich beispielhaft als Teil eines Ergebnisses E eingezeichnet ist.

Beispielsweise kann ein Abstand A zum Durchschnitt D des Ensembles von Betriebsparametern BPₙ definiert werden in Bezug auf jeden der Betriebsparameter BPₙ.

Für den Betriebsparameter BPₓ würde festgestellt, dass über die Zeit t dieser Abstand A(t) einen Schwellwert S überschreitet.

In dem Fall wird hier ein wahr-positiv-Ergebnis als Teil einer wahr-positiv-Signalisierung SE_{P} mit entsprechender Signalisierung 420.1 von einem Service- und/oder Überprüfungsmodul 30.1 zu einer Ausführungsmodul 30.2 ausgegeben.

Auch hier ist dies verbunden mit einer Empfehlung in einem Servicesignal 430, dass die Antriebseinheit X eine unnormales Betriebsverhalten im Hinblick auf den Betriebsparameter BPₓ zeigt und zu überprüfen ist in Bezug auf den Betriebsparameter BPₓ.

Dieses Verfahren kann -zusätzlich zur Verwendung des in Fig. 4B gezeigten Abstands in Bezug auf einen Schwellwert-- eine Reihe weiterer statistischer Auswertungsmethoden zur Angabe eines Ergebnisses E umfassen. Der Abstand kann --wie in Fig. 4B gezeigt-- mit einem im Wesentlichen festen Abstandsmaß A gegeben sein. Zusätzlich oder alternativ kann der Abstand --wie er in Fig. 4B gezeigt ist-- auch mit einem Abstandsmaß A(t) als Funktion der Zeit gegeben sein. Ein vorgenanntes Abstandsmaß A, A(t) kann zur Bestimmung des Abstands dienen. Es kann zusätzlich auch zur Gruppierung von Fehlersituationen in statistischer Weise verwendet werden, die allgemeingültiger definiert werden können und/oder unabhängig von der Art eines bestimmten Betriebsparameters BPₙ. festlegbar sind.

### BEZUGSZEICHENLISTE

- 1: Antriebseinrichtungen
- 10: Datenlogger
- 11: Sendeinheit
- 30: Stellglied
- 30.1: Service- und/oder Überprüfungsmodul
- 30.2: Ausführungsmodul
- 101: Sendesignal
- 200: Betriebsdaten
- 300: Module und Datenstrukturen
- 310: Beobachtersoftware oder sonstigen Monitor
- 310A: Monitoralgorithmus
- 320: Störungserkennung
- 320A: Störungsdetektionsalgorithmus
- 400: Automatische Signalisierung
- 410: Störungsanzeige
- 420.1, 420.2: Erster, zweiter Signalisierungsstrang
- 430: Servicesignal
- 500: Stellregelverbindung
- 540: Service- oder Überprüfungsaktion
- 600: Rückkopplung
- 1000: Überwachungsverfahren
- A, A(t): Abstandsmaß
- DE: Diskriminierungseinheit
- BP BP_{X} BP_{N}: Betriebsparameter
- D: Durchschnitt
- E: Ergebnis
- ECU: Steuerung
- E_{F}: artifizielles --also falsch-positives-- Ergebnis
- E_{P}: echtes -also wahr-positives-- Ergebnis
- ERR: Fehler
- F: Filter
- KR: Recheneinheit
- KS: Speicher
- K: Kontrollinstanz
- Limit_{LO} und Limit_{HI}: Schwellwertbereiche
- M: Modell
- P_{L}: Ladedruck
- R: Regler
- S: Schwellwert
- SR: Feedback-Signal
- SE_{P}: wahr-positiv-Signal
- T310, T320: Trainingalgorithmus
- T_{ÖL}: Öltemperatur
- T_{AG}: Abgastemperatur
- V_{N}: Leerlaufgeschwindigkeit

## Patentansprüche

1. Überwachungsverfahren für den Betrieb einer Anzahl von einer oder mehreren Antriebseinrichtungen, insbesondere für den Betrieb einer Brennkraftmaschine, wobei eine Antriebseinrichtung eine Steuereinrichtung aufweist und ein Betriebsparameter der Antriebseinrichtung auf Grundlage von mittels der Steuereinrichtung erfassten Betriebsdaten für den Betriebsparameter überwacht wird, aufweisend die Schritte:
- Überwachen des Betriebsparameters der Antriebseinrichtung mit einem Monitoralgorithmus für die Betriebsdaten,- Anwenden eines Störungsdetektionsalgorithmus für die erfassten Betriebsdaten einer Störungserkennung zum Erkennen einer Störung betreffend den Betriebsparameter der Antriebseinrichtung,
- Senden einer Störungsanzeige aus der Störungserkennung für die Antriebseinrichtung basierend auf einem Ergebnis des Störungsdetektionsalgorithmus;
- Empfangen der Störungsanzeige und Überprüfen des Ergebnisses,- Aktivieren einer Stellregelverbindung zur Antriebseinrichtung in Bezug auf den Betriebsparameter und Rückkoppeln eines Überwachungswertes für den Betriebsparameter an eine Rückkopplungsverbindung zum Monitoralgorithmus,
**dadurch gekennzeichnet, dass**
das Ergebnis nach Prüfung als falsch-positiv oder wahr-positiv qualifiziert wird, und
- die Störungserkennung eine Diskriminierungseinheit aufweist, die
- das als wahr-positive qualifizierte Ergebnis an die Stellregelverbindung zu einem Stellglied gibt, und
- das als falsch-positiv qualifizierte Ergebnis an die Rückkopplungsverbindung zum Beobachtermodul gibt.

2. Verfahren nach Anspruch 1, **dadurch gekennzeichnet, dass** die Diskriminierungseinheit betreffend das qualifizierte Ergebnis
- nur das als wahr-positive qualifizierte Ergebnis an die Stellregelverbindung zu einem Stellglied gibt, und
- nur das als falsch-positiv qualifizierte Ergebnis an die Rückkopplungsverbindung zum Beobachtermodul gibt.

3. Verfahren nach Anspruch 1 oder 2, **dadurch gekennzeichnet, dass** der Überwachungswert und das , insbesondere nur das, als falsch-positiv qualifizierte Ergebnis an die Rückkopplungsverbindung zum Beobachtermodul gegeben wird.

4. Verfahren nach einem der vorhergehenden Ansprüche, **dadurch gekennzeichnet, dass** die Rückkopplungsverbindung vom Stellglied zum Beobachtermodul als eine Lern-Rückkopplung ausgebildet ist, und das Verfahren weiter die Schritte aufweist:
- Anpassen des Monitoralgorithmus und/oder des Störungsdetektionsalgorithmus mit dem falsch-positiv qualifizierten Ergebnis, und/oder
- Veranlassen einer Korrekturmaßnahme an der Antriebseinrichtung mittels dem Stellglied in Abhängigkeit vom wahr-positiv qualifizierten Ergebnis.

5. Verfahren nach einem der vorhergehenden Ansprüche, **dadurch gekennzeichnet, dass** für das wahr-positiv qualifizierte Ergebnis ein Vorliegen der Störung impliziert bzw. bestätigt wird und/oder für das falsch-positiv qualifizierte Ergebnis ein Nicht-Vorliegen der Störung impliziert bzw. bestätigt wird.

6. Verfahren nach einem der vorhergehenden Ansprüche, **dadurch gekennzeichnet, dass** das Überwachen der Betriebsparameter ein Überwachen der Betriebs- und Messgrößen umfasst unter Anwenden eines Beobachtersystems umfassend ein physikalisches Modell der Antriebseinrichtung mit den Betriebsgrößen zur Rekonstruktion von Zuständen der Antriebseinrichtung unter Berücksichtigung der Messgrößen.

7. Verfahren nach einem der vorhergehenden Ansprüche, **dadurch gekennzeichnet, dass** die Betriebsparameter als zeitdiskrete Betriebsdatenfolge erfasst werden, wobei die Störung als Störverlauf eines Betriebsparameters für die zeitdiskrete Betriebsdatenfolge erkannt wird.

8. Verfahren nach einem der vorhergehenden Ansprüche, **dadurch gekennzeichnet, dass** der Störung ein technischer Störbereich der Antriebseinrichtung zugeordnet und/oder angezeigt wird, wobei die Störungsanzeige Störverlauf und Störungsbereich umfasst.

9. Verfahren nach einem der vorhergehenden Ansprüche, wobei
- das Verfahren zum Betreiben einer einzigen Antriebseinrichtung verwendet wird; und
- das Anwenden des Störungsdetektionsalgorithmus einen Vergleich eines aktuellen Wertes eines Betriebsparameters mit zumindest einem Teil des über den Betriebszeitraum erfassten Verlaufs des Betriebsparameters beinhaltet.

10. Verfahren nach einem der vorhergehenden Ansprüche, wobei
- das Verfahren zum Betreiben einer Mehrzahl von Antriebseinrichtungen verwendet wird;
- für jede der Antriebseinrichtungen mindestens ein Betriebsparameter erfasst wird; und
- das Anwenden des Störungsdetektionsalgorithmus einen Vergleich eines Wertes eines Betriebsparameters einer Antriebseinrichtung mit Werten des Betriebsparameters der restlichen der Mehrzahl der Antriebseinrichtungen beinhaltet.

11. System ausgebildet für die Ausführung eines Überwachungsverfahrens nach einem der Ansprüche 1 bis 10 für den Betrieb einer Anzahl von einer oder mehreren Antriebseinrichtungen, wobei eine Antriebseinrichtung eine Steuereinrichtung aufweist und ein Betriebsparameter der Antriebseinrichtung auf Grundlage von mittels der Steuereinrichtung erfassten Betriebsdaten für den Betriebsparameter überwacht wird, wobei das System aufweist:
- die Anzahl von ein oder mehreren Antriebseinrichtungen, insbesondere eine Brennkraftmaschine, wobei
- die Steuereinrichtung mit mindestens einer Antriebseinrichtung signalverbunden ist, und
- eine Servereinrichtung einer Kontrollinstanz mit der Steuereinrichtung signalverbunden ist.

12. System nach Anspruch 11, **dadurch gekennzeichnet, dass** die Servereinrichtung der Kontrollinstanz aufweist:
- ein Empfangsmodul zum Empfangen der Störungsanzeige;
- ein Überprüfungsmodul zum Überprüfen des Ergebnisses der erkannten Störung durch die Kontrollinstanz nach Empfang der Störungsanzeige,
- eine Diskriminierungseinheit, die das wahr-positiv qualifizierte Ergebnis an die Stellregelverbindung zu einem Stellglied gibt und das falsch-positiv qualifizierte Ergebnis an die Rückkopplungsverbindung zum Beobachtermodul gibt.

13. System nach Anspruch 11 oder 12, **dadurch gekennzeichnet, dass** die Steuereinrichtung der Antriebseinrichtung aufweist:
- ein Erfassungsmodul, das ausgebildet ist, zum Erfassen und Überwachen der Betriebsparameter der Antriebseinrichtung mit einem Monitoralgorithmus eines Beobachtermoduls der Steuereinrichtung,
- ein Ausführungsmodul, das ausgebildet ist, zum Anwenden eines Störungsdetektionsalgorithmus einer Störungserkennung zum Erkennen einer Störung,
- ein Sendemodul, das ausgebildet ist, zum Senden einer Störungsanzeige aus der Störungserkennung für die Antriebseinrichtung basierend auf einem Ergebnis des Störungsdetektionsalgorithmus.

14. System nach einem der Ansprüche 11 bis 13 **gekennzeichnet durch** ein oder mehrere Anpassungsmodule und/oder Behebungsindikationsmodul, ausgebildet zum
- Anpassen des Monitoralgorithmus und/oder des Störungsdetektionsalgorithmus mit dem falsch-positiv qualifizierten Ergebnis, und/oder
- Veranlassen einer Korrekturmaßnahme an der Antriebseinrichtung mittels dem Stellglied
in Abhängigkeit vom wahr-positiv qualifizierten Ergebnis.

## Claims

1. A monitoring method for operating a number of one or more drive devices, in particular for operating an internal combustion engine, wherein a drive device has a control device, and an operating parameter of the drive device is monitored on the basis of
operating data for the operating parameter, acquired by means of the control device, comprising the following steps:
- monitoring the operating parameters of the drive device with a monitoring algorithm for the operating data,
- applying a fault detection algorithm to the acquired operating data of a fault detection to detect a fault concerning the operating parameter of the drive device,
- sending a fault indication from the fault detection for the drive device, based on a result of the fault detection algorithm;
- receiving the fault indication and checking the result,
- activating a control connection to the drive device with respect to the operating parameter and feeding back a monitoring value for the operating parameter to a feedback connection to the monitoring algorithm,
**characterised in that**
the result is qualified as false-positive or true-positive after testing, and
- the interference detection has a discrimination unit which
- passes the result, qualified as a true-positive, to the control connection to a control element, and
- passes the result, qualified as a false-positive, to the feedback connection to the observer module.

2. The method according to claim 1, **characterised in that** the discrimination unit concerning the qualified result
- only passes the result, qualified as true-positive, to the control connection to a control element, and
- only passes the result, qualified as false-positive, to the feedback connection to the observer module.

3. The method according to claim 1 or 2, **characterised in that** the monitoring value and the result, in particular only the result, qualified as false-positive, are passed to the feedback connection to the observer module.

4. The method according to any one of the preceding claims, **characterised in that** the feedback connection from the control element to the observer module is configured as a learning feedback, and the method further comprises the following steps:
- adapting the monitoring algorithm and/or the fault detection algorithm with the false-positive qualified result, and/or
- initiating a corrective action on the drive device by means of the control element depending on the true-positive qualified result.

5. The method according to any one of the preceding claims, **characterised in that**, for the true-positive qualified result, a presence of the fault is implied or confirmed and/or for the false-positive qualified result, a non-presence of the fault is implied or confirmed.

6. The method according to any one of the preceding claims, **characterised in that** the monitoring of the operating parameters comprises monitoring the operating and measured variables applying an observer system, comprising a physical model of the drive device with the operating variables for reconstruction of states of the drive device taking into account the measured variables.

7. The method according to any one of the preceding claims, **characterised in that** the operating parameters are acquired as a time-discrete operating data sequence, wherein the fault is recognized as a fault curve of an operating parameter for the time-discrete operating data sequence.

8. The method according to any one of the preceding claims, **characterised in that** a technical fault area of the drive device is attributed to the fault and/or displayed, wherein the fault display comprises the fault history and the fault area.

9. The method according to any one of the preceding claims, wherein
- the method is used to operate a single drive device; and
- applying the fault detection algorithm involves a comparison of an actual value of an
operating parameter with at least part of the history of the operating parameter, acquired over the operating period.

10. The method according to any one of the preceding claims, wherein
- the method to operate a plurality of drive devices is used;
- at least one operating parameter is acquired for each of the drive devices; and
- applying the fault detection algorithm includes comparing a value of an operating parameter of a drive device with values of the operating parameter of the remaining ones of the plurality of drive devices.

11. A system, configured to carry out a monitoring method according to any one of claims 1 to 10 for operating a number of one or more drive devices, wherein a drive device has a control device and an operating parameter of the drive device is monitored on the basis of operating data for the operating parameter, acquired by means of the control
device, wherein the system comprises:
- the number of one or more drive devices, in particular an internal combustion engine, wherein
- the control device is signal-connected to at least one drive device, and
- a server device of a control authority is signal-connected to the control device.

12. The system according to claim 11, **characterised in that** the server device of the control authority has:
- a receiver module for receiving the fault indication;
- a verification module for verifying the result of the detected fault by the control authority after receiving the fault notification,
- a discrimination unit that sends the true-positive qualified result to the control connection to an control element and sends the false-positive qualified result to the feedback
connection to the observer module.

13. The system according to claim 11 or 12, **characterised in that** the control device of the drive device comprises:
- an acquisition module, that is configured to acquire and monitor the operating parameters of the drive device with a monitoring algorithm of an observer module of the control device,
- an execution module, that is configured to apply a fault detection algorithm of a fault detection to detect a fault,
- a sending module, that is configured to send a fault indication from the fault detection for the drive device, based on a result of the fault detection algorithm.

14. The system according to any one of claims 11 to 13, **characterised by** one or more adaptation modules and/or remedy indication modules, configured for
- adapting the monitoring algorithm and/or the fault detection algorithm with the false-positive qualified result, and/or
- initiating a corrective action on the drive device by means of the control element depending on the true-positive qualified result.

## Revendications

1. Procédé de surveillance du fonctionnement d'un certain nombre d'un ou de plusieurs dispositifs d'entraînement, en particulier pour le fonctionnement d'un moteur à combustion interne, dans lequel un dispositif d'entraînement comporte un dispositif de commande et un paramètre de fonctionnement du dispositif d'entraînement est surveillé sur la base de données de fonctionnement pour le paramètre de fonctionnement détectées par le dispositif de commande, comprenant :
- le surveillance du paramètre de fonctionnement du dispositif d'entraînement avec un algorithme de surveillance pour les données de fonctionnement ;
- l'application d'un algorithme de détection de défaut pour les données de fonctionnement détectées d'une détection de défaut pour détecter un défaut concernant le paramètre de fonctionnement du dispositif d'entraînement ;
- l'envoi d'un indicateur de défaut à partir de la détection de défaut pour le dispositif d'entraînement sur la base d'un résultat de l'algorithme de détection de défaut ;
- la réception de l'affichage de défaut et vérification du résultat,
- l'activation d'une liaison de règle de réglage au dispositif d'entraînement par rapport au paramètre de fonctionnement et la rétroaction d'une valeur de surveillance pour le paramètre de fonctionnement à une liaison de rétroaction à l'algorithme de surveillance,
**caractérisé en ce que**
le résultat est qualifié comme faux positif ou vrai positif après vérification, et
- la détection de défaut comporte une unité de discrimination qui
- transmet le résultat qualifié de vrai-positif à la liaison de réglage d'actionneur vers un actionneur, et
- transmet le résultat qualifié de faux positif à la liaison de rétroaction du module d'observation.

2. Procédé selon la revendication 1, **caractérisé en ce que** l'unité de discrimination relative au résultat qualifié
- ne fournit que le résultat qualifié de vrai positif à la liaison de règle de réglage vers un actionneur, et
- ne renvoie que le résultat qualifié de faux positif à la liaison de rétroaction vers le module d'observation.

3. Procédé selon la revendication 1 ou 2, **caractérisé en ce que** la valeur de surveillance et, en particulier seulement, le résultat qualifié de faux positif sont transmis à la liaison de rétroaction du module d'observation.

4. Procédé selon l'une des revendications précédentes, **caractérisé en ce que** la liaison de rétroaction de l'actionneur au module d'observation est conçue comme une rétroaction d'apprentissage, et que le procédé comporte en outre les étapes suivantes :
- adaptation de l'algorithme de surveillance et/ou de l'algorithme de détection de défaut avec le résultat qualifié de faux positif, et/ou
- déclenchement d'une action corrective sur le dispositif d'entraînement au moyen de l'actionneur en fonction du résultat qualifié de vrai positif.

5. Procédé selon l'une des revendications précédentes, **caractérisé en ce que**, pour le résultat qualifié de vrai positif, une présence du défaut est impliquée ou confirmée et/ou pour le résultat qualifié de faux positif, une absence du défaut est impliquée ou confirmée.

6. Procédé selon l'une des revendications précédentes, **caractérisé en ce que** la surveillance des paramètres de fonctionnement comprend une surveillance des variables de fonctionnement et des variables mesurées, en utilisant un système d'observation comprenant un modèle physique du dispositif d'entraînement avec les variables de fonctionnement pour la reconstruction des états du dispositif d'entraînement en tenant compte des variables mesurées.

7. Procédé selon l'une des revendications précédentes, **caractérisé en ce que** les paramètres de fonctionnement sont détectés en tant que séquence de données de fonctionnement en temps discret, le défaut étant reconnu en tant que profil de défaut d'un paramètre de fonctionnement pour la séquence de données de fonctionnement en temps discret.

8. Procédé selon l'une des revendications précédentes, **caractérisé en ce que** le défaut est associé et/ou affiché à une zone de défaut technique du dispositif d'entraînement, l'affichage du défaut comprenant la courbe de défaut et la zone de défaut.

9. Procédé selon l'une des revendications précédentes, dans lequel
- le procédé est utilisé pour faire fonctionner un seul dispositif d'entraînement ; et
- l'application de l'algorithme de détection de défaut comprend une comparaison d'une valeur actuelle d'un paramètre de fonctionnement avec au moins une partie de l'évolution du paramètre de fonctionnement détectée sur la période de fonctionnement

10. Procédé selon l'une des revendications précédentes, dans lequel
- le procédé est utilisé pour faire fonctionner une pluralité de dispositifs d'entraînement ;
- pour chacun des dispositifs d'entraînement, au moins un paramètre de fonctionnement est détecté ; et
- l'application de l'algorithme de détection de défaut comprend une comparaison d'une valeur d'un paramètre de fonctionnement d'un dispositif d'entraînement avec des valeurs du paramètre de fonctionnement du reste de la pluralité des dispositifs d'entraînement.

11. Système conçu pour l'exécution d'un procédé de surveillance selon l'une des revendications 1 à 10 pour le fonctionnement d'un nombre d'un ou de plusieurs dispositifs d'entraînement, dans lequel un dispositif d'entraînement comprend un dispositif de commande, et un paramètre de fonctionnement du dispositif d'entraînement étant surveillé sur la base de données de fonctionnement relatives au paramètre de fonctionnement détectées au moyen du dispositif de commande, le système comportant :
- le nombre d'un ou de plusieurs dispositifs d'entraînement, en particulier un moteur à combustion interne, dans lequel
- le dispositif de commande est relié en signal à au moins un dispositif d'entraînement, et
- un dispositif serveur d'une instance de contrôle est relié en signal au dispositif de commande.

12. Système selon la revendication 11, **caractérisé en ce que** le dispositif serveur de l'instance de contrôle comporte :
- un module de réception pour recevoir l'indication de défaut ;
- un module de vérification pour vérifier le résultat du défaut détecté par l'instance de commande après réception de l'affichage de défaut,
- une unité de discrimination qui donne le résultat qualifié vrai-positif à la liaison de règle de réglage à un actionneur et donne le résultat qualifié faux-positif à la liaison de rétroaction au module d'observation.

13. Système selon la revendication 11 ou 12, **caractérisé en ce que** le dispositif de commande du dispositif d'entraînement comporte :
- un module de détection qui est conçu pour détecter et surveiller les paramètres de fonctionnement du dispositif d'entraînement avec un algorithme de surveillance d'un module d'observation du dispositif de commande,
- un module d'exécution qui est conçu pour appliquer un algorithme de détection de défaut d'une détection de défaut pour détecter un défaut,
- un module de transmission qui est conçu pour transmettre une indication de défaut à partir de la détection de défaut pour le dispositif d'entraînement sur la base d'un résultat de l'algorithme de détection de défaut.

14. Système selon l'une des revendications 11 à 13, **caractérisé par** un ou plusieurs modules d'adaptation et/ou module d'indication de dépannage, conçu pour
- adapter l'algorithme de surveillance et/ou l'algorithme de détection de défaut avec le résultat qualifié de faux positif, et/ou
- initier une mesure corrective sur le dispositif d'entraînement au moyen de l'actionneur,
en fonction du résultat qualifié de vrai positif.
